# NEUE EUROPÄISCHE PATENTSCHRIFT

(11) **EP 2 531 440 B2**
(45) Veröffentlichungstag und Bekanntmachung des Hinweises auf die Entscheidung über den Einspruch: **01.05.2019**
(45) Hinweis auf die Patenterteilung: 08.07.2015
(21) Anmeldenummer: 11702611.2
(22) Anmeldetag: 01.02.2011
(51) Int. Cl.: B67C 3/24, B67C 7/00, B29C 49/06

(54) **VORRICHTUNG UND VERFAHREN ZUM AUTOMATISIERTEN FORMEN UND ABFÜLLEN VON BEHÄLTERN**
DEVICE AND METHOD FOR AUTOMATICALLY SHAPING AND FILLING CONTAINERS
DISPOSITIF ET PROCÉDÉ DE MOULAGE ET DE REMPLISSAGE AUTOMATISÉS DE RÉCIPIENTS

(30) Priorität: 03.02.2010 DE 102010007401
(43) Veröffentlichungstag der Anmeldung: 12.12.2012
(73) Patentinhaber: Kärcher Futuretech GmbH, 71409 Schwaikheim (DE)
(72) Erfinder: WEIBLE, Frank, 74366 Kirchheim (DE)
(74) Vertreter: Witte, Weller & Partner Patentanwälte mbB
(86) Internationale Anmeldenummer: PCT/EP2011/051349
(87) Internationale Veröffentlichungsnummer: WO 2011/095464

(56) Entgegenhaltungen:
- EP-A2- 0 266 804
- EP-A2- 0 950 606
- EP-A2- 2 138 298
- WO-A1-99/54244
- WO-A1-2005/023652
- DE-A1- 1 902 897
- DE-A1- 1 937 164
- DE-A1- 2 900 714
- DE-A1- 10 016 631
- DE-A1- 10 322 556
- DE-A1- 19 654 658
- DE-A1-102008 035 004
- US-A- 4 807 421
- US-A- 5 834 038
- US-A1- 2008 152 538

## Beschreibung

Die vorliegende Erfindung betrifft eine Vorrichtung zum automatisierten Formen und Abfüllen von Behältern nach dem Oberbegriff von Anspruch 1.

Die Erfindung betrifft ferner ein Verfahren zum automatisierten Formen und Abfüllen von Behältern nach dem Oberbegriff von Anspruch 14.

Eine solche Vorrichtung und ein solches Verfahren sind beispielsweise aus DE 1 902 897 A bekannt. Die beschriebene Vorrichtung besitzt zudem eine Erwärmstation.

Vorrichtungen zum automatisierten Formen und Abfüllen von Behältern werden vornehmlich industriell eingesetzt, unter anderem in der Getränkeindustrie. Dabei handelt es sich um stationär betriebene Anlagen, deren Arbeitsstationen und Fördereinrichtung fest in einem Gebäude untergebracht sind. Die Arbeitsstationen und die Fördereinrichtung werden einmalig in dem Gebäude installiert und verbleiben dort während der Gebrauchsdauer der Anlage, die in der Regel mehrere Jahre beträgt. Stationäre Anlagen sind für hohe Durchsatzzahlen ausgelegt, die beispielsweise auf dem Gebiet der Getränkeindustrie in der Größenordnung von bis zu 40.000 Flaschen in der Stunde liegen. Um dies zu erreichen werden besonders leistungsfähige Arbeitsstationen und Fördereinrichtungen eingesetzt.

Die EP 0 950 606 B1 beschreibt eine Maschine zum automatisierten Formen und Abfüllen von Behältern. Hierfür weist diese Maschine eine als Blasstation ausgebildete Behälterformstation auf. Mit der Blasstation werden aus Flaschen-Vorformen, die aus einem thermoplastischen Material bestehen, unter Einwirkung von Wärme und Druckluft Flaschen geformt. In einer Arbeitsstation werden die Flaschen befüllt und anschließend in einer Verschließstation verschlossen. Als Fördereinrichtung, mit der die Flaschen zwischen den einzelnen Arbeitsstationen bewegt werden, werden Greifer eingesetzt.

### Stand der Technik

Bei stationären Anlagen kommen neben greiferbasierten Fördereinrichtungen auch anders ausgebildete Fördereinrichtungen zum Einsatz. So ist aus der Stand der Technik eine Anlage bekannt, bei der eine aus Klemmbacken aufgebaute Fördereinrichtung zum Einsatz kommt. Die Klemmbacken sind beiderseits der Flaschen, und zwar quer zu deren Transportrichtung jeweils in der Art eines Rechens angeordnet. Durch wechselseitiges Verschieben der linken und der rechten Klemmbacken werden die Flaschen vorwärtsbewegt. Auch sind Anlagen bekannt, deren Fördereinrichtungen aus so genannten Transport-, Einlauf- und Auslaufsternen aufgebaut sind, wie dies beispielsweise in der DE 10 2005 015 565 A1 oder in der DE 199 28 325 A1 beschrieben ist.

Den vorstehend beschriebenen stationären Anlagen ist gemein, dass sie allesamt Fördereinrichtungen aufweisen, bei denen das Bewegen der Flaschen-Vorformen und der Flaschen zwischen den einzelnen Arbeitsstationen durch Übergabebewegungen oder Umgreifbewegungen erfolgt. Bei einer greiferbasierten Fördereinrichtung erfolgt das Bewegen der Flaschen derart mittels Übergabebewegungen, dass die Flaschen in einer durch den Bearbeitungsablauf definierten Abfolge von verschiedenen Greifern aufgenommen werden und somit zwischen den einzelnen Arbeitsstationen bewegt werden. Auch bei einer aus Transport-, Einlauf- und Auslaufsternen aufgebauten Fördereinrichtung werden die Flaschen durch wiederholte Übergabe der Flaschen vorwärtsbewegt. Bei beiden Arten von Fördereinrichtungen werden die Behälter-Vorform oder ein Behälter an einem ersten Ort, beispielsweise an einer ersten Arbeitsstation, durch ein Transportelement, beispielsweise ein Greifer oder ein Transportstern, aufgegriffen, um dann an einem zweiten Ort, beispielweise an einer zweiten Arbeitsstation, abgegeben zu werden. Bei einer rechenartig ausgebildeten Fördereinrichtung werden die Flaschen durch permanentes Umgreifen der linken und der rechten Klemmbacken vorwärtsbewegt.

Die Übergabebewegungen und Umgreifbewegungen beinhalten Relativbewegungen. Zum einen beinhalten sie Relativbewegungen zwischen einem Transportelement der Fördereinrichtung und dem zu transportierenden und somit zu ergreifenden Gegenstand, wie dies bei einer greiferbasierten Fördereinrichtung, einer aus Transport-, Einlauf- und Auslaufsternen aufgebauten Fördereinrichtung oder einer rechenartig ausgebildeten Fördereinrichtung der Fall ist. Bei diesen Relativbewegungen handelt es sich somit um Relativbewegungen zwischen einem Transportelement und einem von diesem räumlich getrennten Gegenstand. Zum anderen beinhalten sie Relativbewegungen zwischen einzelnen Transportelementen der Fördereinrichtung selbst, wie dies bei einer aus Transport-, Einlauf- und Auslaufsternen aufgebauten Fördereinrichtung oder einer rechenartig ausgebildeten Fördereinrichtung der Fall ist. Um solche Relativbewegungen überhaupt ausführen zu können, müssen die einzelnen Komponenten der Fördereinrichtung untereinander und in Bezug auf die Arbeitsstationen beim Aufstellen einer Anlage sehr genau ausgerichtet werden. Somit sind beim Aufstellen einer Anlage umfangreiche Justage- und Nivellierarbeiten erforderlich, was in der Regel nur durch speziell geschultes Personal erfolgen kann.

Die aufwendigen Justage- und Nivellierarbeiten haben zur Folge, dass sich die bekannten Anlagen nicht für einen mobilen Einsatz eignen. Eine mobile Anlage wäre jedoch wünschenswert, wenn eine große Anzahl von Menschen über einen längeren Zeitraum hinweg abseits der Zivilisation verpflegt werden soll. Klassische Anwendungsfälle sind militärische Übungen oder Einsätze von größeren Truppenverbänden, aber auch humanitäre Einsätze, beispielsweise bei der Katastrophenhilfe in einem Erdbebengebiet. Bekannt sind mobile Wasseraufbereitungsanlagen, die unter anderem von der vorliegenden Anmelderin angeboten werden. Mit mobilen Wasseraufbereitungsanlagen kann in dem Einsatzgebiet vorgefundenes Rohwasser, beispielsweise Wasser aus einem ruhenden Gewässer, zu Trinkwasser aufbereitet werden. Eine Abfüllung in Flaschen ist jedoch unter solchen Umständen schwierig.

Eine Vorrichtung zum automatisierten Formen und Abfüllen von Behältern für mobile Einsätze muss sehr robust ausgebildet sein. Zum einen muss sie einen Transport in das Einsatzgebiet überstehen. Zum anderen muss sie auch unter rauen Betriebsbedingungen und nach häufigem Auf- und Abbau zuverlässig funktionieren. Zudem soll sie nach einem Standortwechsel ohne aufwändige Einstell- und Justagearbeiten wieder in Betrieb genommen werden können. Auch soll sie einfach instand zu setzen sein. Diese Anforderungen erfüllen die aus dem Stand der Technik bekannten Vorrichtungen nicht.

Vor diesem Hintergrund ist es eine Aufgabe der vorliegenden Erfindung, eine Vorrichtung und ein Verfahren der eingangs genannten Art anzugeben, die einfach zu handhaben sind und zuverlässig arbeiten, insbesondere unter widrigen Einsatzbedingungen, wie sie beispielsweise bei einem mobilen Einsatz vorherrschen. Zudem soll die Vorrichtung kompakt aufgebaut sein.

Nach einem ersten Aspekt der vorliegenden Erfindung wird diese Aufgabe durch eine Vorrichtung nach Anspruch 1 gelöst.

Die Aufgabe wird ferner durch ein Verfahren nach Anspruch 14 gelöst.

Der neuen Vorrichtung und dem neuen Verfahren liegt die Idee zugrunde, die Behälter-Vorform in einen Behälterträger einzusetzen und die Behälter-Vorform und den aus dieser geformten Behälter während des gesamten Bearbeitungsablaufs in diesem Behälterträger zu belassen. Die Behälter-Vorform und der Behälter werden mit dem Behälterträger, in den die Behälter-Vorform zu Beginn eines definierten Bearbeitungsablaufs eingesetzt wird, zwischen den einzelnen Arbeitsstationen (vorzugsweise allen Arbeitsstationen) bewegt. Sie verbleiben auch an den einzelnen Arbeitsstationen in dem einen zugeordneten Behälterträger. An der Behälterformstation wird aus der in den Behälterträger eingesetzten Behälter-Vorform der Behälter geformt. Der dann in dem Behälterträger befindliche Behälter wird anschließend an der Abfüllstation und an der Verschließstation abgefüllt und verschlossen. Erst an der Auswerfstation wird die Zuordnung von Behälter und Behälterträger aufgehoben, indem der verschlossene Behälter aus dem Behälterträger entnommen wird. Die Behälter-Vorform und der aus dieser geformte Behälter werden folglich zwischen den einzelnen Arbeitsstationen bewegt, ohne dass hierfür Übergabebewegungen oder Umgreifbewegungen erforderlich sind. Bei der neuen Vorrichtung treten keine vorstehend beschriebenen Relativbewegungen zwischen dem Transportelement der Fördereinrichtung und dem zu transportierenden Gegenstand auf. Das Bewegen der Behälter-Vorform und des Behälters zwischen den einzelnen Arbeitsstationen umfasst keine Relativbewegung im Sinne einer Übergabebewegung oder Umgreifbewegung der Behälter-Vorform oder des Behälters in Bezug auf den Behälterträger, in den die Behälter-Vorform eingesetzt ist.

Da die neue Vorrichtung und das neue Verfahren ohne Relativbewegungen auskommen, können beide nach Aufstellen der Vorrichtung ohne aufwändige Einstell- und Justagearbeiten in Betrieb genommen werden, beispielsweise auch auf einem unebenen Untergrund. Hinzu kommt, dass die neue Vorrichtung im Vergleich zu den bekannten Vorrichtungen mit einer geringeren Anzahl von Bewegung bewirkenden Komponenten auskommt, um eine Behälter-Vorform und einen Behälter zwischen den einzelnen Arbeitsstationen zu bewegen. Darüber hinaus sind diese Komponenten bei der neuen Vorrichtung weniger komplex aufgebaut. Zudem sind die für das Bewegen der Behälter-Vorform und des Behälters durchzuführenden Bewegungen bzw. Bewegungsabläufe weniger komplex.

Die neue Vorrichtung und das neue Verfahren sind demzufolge sehr robust und arbeiten auch bei widrigen Einsatzbedingungen zuverlässig, wie sie beispielsweise bei einem mobilen Einsatz vorliegen. Zudem sind die neue Vorrichtung und das neue Verfahren einfach handhabbar und können somit auch von Personen ohne große Fachkenntnis in Betrieb genommen werden.

Die oben genannte Aufgabe wird daher vollständig gelöst.

In einer Ausgestaltung der Erfindung sind die Bewegungseinheiten dazu ausgebildet, den Behälterträger auf einer geschlossenen Trajektorie zu bewegen.

Diese Maßnahme ermöglicht einen kompakten Aufbau der Vorrichtung. Zudem bewirkt sie, dass die Vorrichtung gut bedienbar ist und der Herstellungsprozess gut überwachbar ist, da die einzelnen Arbeitsstationen auf kleinem Raum angeordnet werden können und somit die Wege zwischen den einzelnen Arbeitsstationen kurz sind.

In einer weiteren Ausgestaltung der Erfindung weist die Fördereinrichtung eine erste und eine zweite Bewegungseinheit auf, wobei die erste Bewegungseinheit dazu ausgebildet ist, den Behälterträger entlang einer ersten Bewegungsrichtung zu bewegen, wobei die zweite Bewegungseinheit dazu ausgebildet ist, den Behälterträger entlang einer zweiten Bewegungsrichtung zu bewegen, und wobei die zweite Bewegungsrichtung im Wesentlichen orthogonal zu der ersten Bewegungsrichtung ausgerichtet ist.

Diese Maßnahme hat den Vorteil einfacher Bewegungsabläufe zwischen den einzelnen Arbeitsstationen. Dies führt dazu, dass die Vorrichtung einfachen handhabbar ist und zudem zuverlässig arbeitet. Außerdem ermöglicht diese Maßnahme einen kompakten Aufbau. Vorzugsweise wird der Behälterträger entlang der ersten Bewegungsrichtung weg von der Einsetzstation bewegt, und entlang der zweiten Bewegungsrichtung hin zu einer zweiten Arbeitsstation, nämlich der Behälterformstation bewegt.

In einer weiteren Ausgestaltung weist die Fördereinrichtung eine dritte Bewegungseinheit auf, die dazu ausgebildet ist, den Behälterträger entlang einer dritten Bewegungsrichtung zu bewegen, wobei die dritte Bewegungsrichtung im Wesentlichen orthogonal zu der zweiten Bewegungsrichtung ausgerichtet ist.

Auch diese Maßnahme ermöglicht die Realisierung einfacher Bewegungsabläufe und somit den Aufbau einer kompakten, einfach handhabbaren und zuverlässig arbeitenden Vorrichtung. Vorzugsweise wird der Behälterträger entlang der dritten Bewegungsrichtung hin zu einer dritten Arbeitsstation, nämlich der Abfüllstation bewegt.

Die Fördereinrichtung kann in einer weiteren Ausgestaltung eine vierte Bewegungseinheit aufweist, die dazu ausgebildet ist, den Behälterträger entlang einer vierten Bewegungsrichtung zu bewegen, wobei die vierte Bewegungsrichtung im Wesentlichen orthogonal zu der dritten Bewegungsrichtung ausgerichtet ist.

Diese Maßnahme ermöglicht einen geradlinigen, geschlossenen Bewegungsablauf und somit einen sehr kompakten Aufbau der Vorrichtung. Der Behälterträger bewegt sich auf einer geschlossenen Bahn. Vorzugsweise wird der Behälterträger entlang der vierten Bewegungsrichtung über eine dritte Arbeitsstation, insbesondere die Verschließstation und über eine vierte Arbeitsstation, insbesondere die Auswerfstation hin zu der Einsetzstation bewegt.

In einer weiteren Ausgestaltung der Erfindung sind die Bewegungseinheiten dazu ausgebildet, die Behälterträger translatorisch zu bewegen.

Diese Maßnahme hat den Vorteil, dass die Behälterträger zwischen den einzelnen Arbeitsstationen mittels einachsiger Bewegungen bewegt werden. Folglich kann beispielsweise auf den Einsatz von Greifern verzichtet werden. Statt dessen können einfach ausgebildete Bewegungseinheiten eingesetzt werden. Dadurch kann die neue Vorrichtung einfach aufgebaut werden, ist einfach handhabbar und arbeitet zudem zuverlässig. Vorteilhafterweise können die Bewegungseinheiten als Pneumatikzylinder oder als elektrischer Antriebe, insbesondere als Servomotoren, ausgeführt sein, wobei aufgrund der besonders einfachen Handhabbarkeit bevorzugt Servomotoren zum Einsatz kommen.

In einer weiteren Ausgestaltung der Erfindung sind die Bewegungseinheiten dazu ausgebildet, die Behälterträger im wesentlichen innerhalb einer definierten Bewegungsebene zu bewegen.

Diese Maßnahme ermöglicht einen einfachen Bewegungsablauf und somit eine einfach handhabbare und zuverlässig arbeitende Vorrichtung. Für das Bewegen der Behälterträger zwischen den einzelnen Arbeitsstationen sind keine überlagerten mehrachsigen Bewegungen erforderlich. Die Vorrichtung kann greiferlos ausgeführt werden. Vorteilhafterweise liegt die Bewegungsebene im Wesentlichen parallel zu einer Ebene, die durch den Untergrund definiert ist, auf dem die Arbeitsstationen und die Fördereinrichtung stehen. Mit anderen Worten werden die Behälterträger in dieser Ausgestaltung im wesentlichen oder sogar durchgehend horizontal bewegt.

In einer weiteren Ausgestaltung der Erfindung ist die Einsetzstation dazu ausgebildet, die Behälter-Vorform durch eine schwerkraftbedingte Bewegung von oben in den Behälterträger einzusetzen.

Diese Maßnahme ermöglicht in besonders einfacher Art und Weise das Einsetzen der Behälter-Vorform in den Behälterträger. Dadurch, dass das Einsetzen durch Ausnutzen der Schwerkraft und somit passiv erfolgt, kann auf den Einsatz einer Bewegungseinheit, beispielsweise eines Greifer, verzichtet werden. Somit entfallen auch hier Justage- und Einstellarbeiten. Demzufolge hat ein Einsetzen der Behälter-Vorform von oben in den Behälterträger Vorteile gegenüber einem Einsetzen von unten. Es ist somit der Aufbau einer einfach handhabbaren und zuverlässig arbeitenden Vorrichtung möglich. Zudem ermöglicht dies den Aufbau einer einfachen und zuverlässig arbeitenden Vorrichtung, die zudem einfach handhabbar ist.

In einer weiteren Ausgestaltung der Erfindung weist der Behälterträger ein Federelement auf, das dazu ausgebildet ist, eine von oben in das Federelement eingesetzte Behälter-Vorform zu halten und ein Entnehmen eines gefüllten Behälters nach unten zu ermöglichen.

Diese Maßnahme ermöglicht die Realisierung eines einfach ausgebildeten Behälterträgers. Das Federelement stellt zum einen sicher, dass eine in den Behälterträger eingesetzte Behälter-Vorform zuverlässig gehalten wird. Zum anderen ermöglicht es aufgrund seiner elastischen Eigenschaften ein problemloses Entnehmen eines gefüllten Behälters, insbesondere eines gefüllten und verschlossenen Behälters. Da der Rumpfbereich eines Behälters einen größeren Durchmesser aufweist als dessen Halsbereich, kann der Behälter nicht nach oben aus dem Federelement und somit aus dem Behälterträger entnommen werden. Es ist lediglich eine Entnahme nach unten möglich. Dies ist aufgrund der elastischen Eigenschaften des Federelements möglich. Zudem ist das Federelement aufgrund seines einfachen Aufbaus eine günstig herzustellende Haltekomponente. Dem Federelement kommt die eigentliche vertikale Haltefunktion des Behälterträgers zu.

In einer weiteren Ausgestaltung der Erfindung ist das Federelement so dimensioniert, dass der gefüllte Behälter schwerkraftbedingt von allein nach unten ausfällt.

Diese Maßnahme trägt zu einem einfachen Aufbau und somit zu einer einfachen Handhabbarkeit und zuverlässigen Arbeitsweise der Vorrichtung bei. Es sind keine Bewegungskomponenten erforderlich, mit denen der gefüllte Behälter aktiv aus dem Behälterträger entnommen werden muss. Statt dessen erfolgt die Entnahme aufgrund der Eigenbewegung des gefüllten Behälters passiv. Bei dieser Dimensionierung des Federelements ist, beginnend mit der Abfüllstation bis hin zu der Auswerfstation eine Führung im Bereich unterhalb der Behälter erforderlich, damit die gefüllten Behälter am Ausfallen aus dem Federelement und somit dem Behälterträger gehindert werden.

In einer weiteren Ausgestaltung der Erfindung weist die Behälter-Vorform einen Halsbereich mit einem Kragen auf, wobei das Federelement als dünne ringförmige Scheibe mit einem Innenrand und einem Außenrand ausgebildet ist.

Dabei wird eine von oben eingesetzte Behälter-Vorform durch Untergreifen ihres Kragens gehalten, wobei ein gefüllter Behälter nach wie vor nach unten entnehmbar ist. Diese Maßnahme hat mehrere Vorteile. Der Kragen im Halsbereich der Behälter-Vorform stellt eine definierte Stelle derselben dar, die auch bei dem in der Behälterformstation stattfindenden Formen des Behälters erhalten bleibt. Somit können die Behälter-Vorform und der aus dieser geformte Behälter in unveränderter Position und Lage durch die komplette Vorrichtung, d.h. zwischen den einzelnen Arbeitsstationen bewegt werden. Sowohl die Behälter-Vorform als auch der Behälter werden den einzelnen Arbeitsstationen in einer definierten Position und Lage zugeführt, weswegen die Arbeiten an den einzelnen Arbeitsstation in zuverlässiger Art und Weise durchgeführt werden können, insbesondere das Herstellen und das Abfüllen des Behälters. Die durch den Kragen definierte Halteposition stellt hinsichtlich Art und Qualität unterschiedlich ausgeführte Behälter eine einheitliche Halteposition dar. Somit kann die neue Vorrichtung für verschiedene Behälterformen verwendet werden. Dadurch, dass der Behälter durch Untergreifen des Kragens in dem Behälterträger gehalten wird, kann der Behälter in der Verschließstation verschlossen werden, ohne dass er hierfür aus dem Behälterträger entnommen werden muss. Somit entfällt eine Übergabe. Dadurch, dass das Federelement als dünne Scheibe ausgeführt ist, kommt es trotz seiner Positionierung unterhalb des Kragens der Behälter-Vorform zu keiner Beeinflussung des innerhalb der Behälterformstation erfolgenden Behälterblasvorganges. Durch die Aufnahme der Behälter-Vorform und der Behälter an deren Kragen hat die Größe und die Form des Behälterkörpers praktisch keinen Einfluss auf die Ausgestaltung der Fördereinrichtung. Die Fördereinrichtung und somit die Vorrichtung kann folglich hinsichtlich Behälter unterschiedlicher Volumina und Formen einfach umgerüstet werden.

In einer weiteren Ausgestaltung der Erfindung weist die Scheibe eine Vielzahl von Schlitzen auf.

Vorteilhafterweise verlaufen die Schlitze beginnend an dem Innenrand der Scheibe über einen Teil der Ringbreite hin zu dem Außenrand der Scheibe. Diese Maßnahme verleihen der Scheibe ihre Elastizität. Insgesamt wird ein einfaches und zuverlässiges Auswerfen des geschlossenen Behälters in der Auswerfstation ermöglicht, was zu einer einfachen Handhabbarkeit und zuverlässigen Arbeitsweise der Vorrichtung beiträgt.

Die Arbeitsstationen und die Fördereinrichtung sowie weitere für den Betrieb der Vorrichtung benötigte Komponenten sind dabei stationär in dem Container verbaut, was beispielsweise werksseitig beim Hersteller der Vorrichtung erfolgt. Die Arbeitsstationen und die Fördereinrichtung verbleiben über deren gesamte Gebrauchsdauer in dem Container. Vorteilhafterweise handelt es sich bei dem Container um einen gemäß der Norm ISO 668 ausgebildeten, sogenannten "ISO-Container". Mit Blick auf einen kompakten Aufbau wird besonders bevorzugt ein so genannter "20-Fuß-Container" vom Typ 1C verwendet, der 20 Fuß lang, 8 Fuß breit und 8 Fuß hoch ist. Alternativ kann auch ein 20-Fuß-Container" vom Typ 1CC verwendet werden, der 20 Fuß lang, 8 Fuß breit und 8 Fuß 6 Zoll hoch ist. Eine in solchen Containern untergebrachte Vorrichtung ist hochmobil, sie kann beispielsweise mittels entsprechend ausgestatteter Transportfahrzeuge auf dem Landweg oder auch mittels entsprechend ausgestatteter Transporthubschrauber auf dem Luftweg verlegt werden.

In einer weiteren Ausgestaltung der Erfindung weisen die Arbeitsstationen ferner zumindest eine der nachfolgenden Arbeitsstationen auf:
- eine Temperaturprüfstation, die dazu ausgebildet ist, zu prüfen, ob eine Behälter-Vorform eine in einem definierten Temperaturbereich liegende Temperatur aufweist,
- eine Behälterprüfstation, die dazu ausgebildet ist, zu prüfen, ob ein geformter Behälter eine Anzahl definierter Formkriterien erfüllt,
- eine Bestrahlungsstation, die dazu ausgebildet ist, einen geformten Behälter zumindest teilumfänglich mit UV-Strahlung zu bestrahlen.

Durch den Einsatz einer Erwärmstation, einer Temperaturprüfstation oder einer Behälterprüfstation wird erreicht, dass die Vorrichtung zuverlässig arbeitet und einfach handhabbar ist. Mit der Erwärmstation werden die Behälter-Vorformen derart erwärmt, dass in der Behälterformstation ohne nennenswerten Ausschuss Behälter aus den Behälter-Vorformen geformt werden können. Mit der Temperaturprüfstation und mit der Behälterprüfstation können Funktionsstörungen in einzelnen Arbeitsstationen festgestellt werden und somit entsprechende Maßnahmen ergriffen werden, so dass es in anderen Arbeitsstationen nicht zu Schäden und insgesamt nicht zu dauerhaften Störungen kommt. So wird mit der Temperaturprüfstation zum einen die Funktionsweise der Erwärmstation überwacht und zum anderen die thermischen Eigenschaften jeder einzelnen Behälter-Vorformen überprüft. Wird festgestellt, dass die Temperatur einzelner vorgewärmter Behälter-Vorformen nicht in dem definierten Temperaturbereich liegt, so können diese BehälterVorformen aussortiert und aus dem Herstellungsprozess entfernt werden. Zu kalte oder zu warme Behälter-Vorformen können in der Behälterformstation platzen und somit in dieser verklemmen oder diese gar beschädigen. Wird in der Temperaturprüfstation festgestellt, dass eine größere Anzahl aufeinanderfolgender Behälter-Vorformen nicht richtig temperiert sind, so ist dies ein Indiz dafür, dass in der Erwärmstation ein Fehler vorliegt. Es können entsprechende Maßnahmen ergriffen werden, beispielsweise kann die komplette Anlage solange abgeschaltet werden, bis der Fehler in der Erwärmstation behoben ist. Mit der Behälterprüfstation wird die Funktion der Behälterformstation überwacht. Hierbei wird beispielsweise geprüft, ob der geformte Behälter eine definierte Form aufweist oder ob der geformte Behälter beispielsweise in einer Seitenwand ein Loch aufweist oder gar geplatzt ist. Mit der Behälterprüfstation werden somit Behälter minderer Qualität, beispielsweise unvollständig ausgeformte Behälter, erkannt und können folglich ausgesondert werden. Somit kann ein Stillstand der Vorrichtung vermieden werden. Insgesamt ermöglichen die Erwärmstation und die beiden Prüfstationen eine einfache Handhabbarkeit der Vorrichtung, so dass diese auch durch Personen ohne große Fachkenntnisse betrieben werden kann, die sogar in der Lage sind, eventuell auftretende Funktionsstörungen zu beheben.

Mit der Bestrahlungsstation wird vorzugsweise der Halsbereich des geformten Behälters bestrahlt, insbesondere der dort befindliche Gewindebereich. Üblicherweise weist eine Behälter-Vorform bereits ein Gewinde auf, weswegen der Halsbereich der Behälter-Vorform in der Behälterformstation nicht aktiv erwärmt wird, um eine Beschädigung des Gewindes zu vermeiden. Befinden sich im Halsbereich bzw. im Gewindebereich Keime, so werden diese bei der Erwärmung der Behälter-Vorform in der Behälterformstation nicht zwangsläufig abgetötet, wohingegen Keime, die sich im Rumpfbereich einer Behälter-Vorform befinden, aufgrund der hohen Temperatur innerhalb der Behälterformstation abgetötet werden. Durch die Bestrahlung können im Halsbereich bzw. Gewindebereich des geformten Behälters befindliche Keime abgetötet werden.

In einer weiteren Ausgestaltung der Erfindung weist die Fördereinrichtung einen Rückführungszweig auf.

Der Rückführungszweig ist dazu ausgebildet, eine Behälter-Vorform, für die eine Überprüfung in der Temperaturprüfstation ergeben hat, dass die Temperatur nicht in dem definierten Temperaturbereich liegt, der Einsetzstation zuzuführen. Diese Maßnahme hat den Vorteil, dass eine nicht richtig erwärmte Behälter-Vorform automatisiert erneut dem Herstellungsprozess zugeführt werden kann. Dadurch wird eine einfache Handhabbarkeit der Vorrichtung erreicht. Vorteilhafterweise kann der Rückführungszweig auch bei Störungen genutzt werden, die an Arbeitsstationen auftreten, die im Herstellungsprozess der Temperaturprüfstation nachfolgen. Hierbei kann es sich beispielsweise um Störungen an der Behälterformstation oder um Störungen an der Abfüllstation handeln.

Vorteilhafterweise ist die Abfüllstation aus einer Vorfüllstation und aus einer Fertigfüllstation aufgebaut. Somit kann der Behälter in zwei Stufen abgefüllt werden. Mit der Vorfüllstation wird ein erstes Volumen des Fluids unter höherem Druck bzw. mit größerem Volumenstrom und somit schnell in den Behälter abgefüllt. Mit der Fertigfüllstation wird ein zweites Volumen des Fluids mit geringerem Druck bzw. geringerem Volumenstrom und somit langsam in den Behälter abgefüllt. Vorzugsweise ist das erste Volumen größer als das zweite Volumen. Vorteilhafterweise entspricht das erste Volumen 80 % des Gesamtvolumens des Fluids, welches in den Behälter abzufüllen ist. Demzufolge entspricht das zweite Volumen 20 % des Gesamtvolumens. Durch diese Maßnahme wird insbesondere beim Abfüllen von Flüssigkeiten ein Aufschäumen verhindert und somit eine einfache Handhabbarkeit der Vorrichtung gewährleistet.

Vorzugsweise weist die Verschließstation eine Deckelstation und eine Befestigungsstation auf, wobei die Deckelstation dazu ausgebildet ist, einen Deckel auf den gefüllten Behälter aufzusetzen, und wobei die Befestigungsstation dazu ausgebildet ist, den aufgesetzten Deckel lösbar an dem Behälter zu befestigen. Die funktionsmäßige Aufteilung in eine Deckelstation und in eine Befestigungsstation ermöglicht den Einsatz von Stationen, die für ihre jeweilige Funktion besonders ausgebildet sind, was zu einer zuverlässigen Arbeitsweise der Vorrichtung beiträgt. Der Deckel kann in vielfältiger Form ausgestaltet sein. So kann es sich um einen Schraubdeckel, um einen Kronkorken oder um einen lediglich in den Halsbereich des Behälters einzudrückenden Verschlusskorken handeln. Vorteilhafterweise ist die Befestigungsstation ferner dazu ausgebildet, den abgefüllten Behälter mit einem Etikett zu versehen. Hierzu kann die Befestigungsstation einen Stempel aufweisen, mit dem beispielsweise Selbstklebeetiketten auf den abgefüllten Behälter aufgedrückt werden.

Vorteilhafterweise ist der für den mobilen Einsatz der Vorrichtung verwendete Container mit einer Kühleinrichtung ausgestattet. Somit kann auch bei widrigen Einsatzbedingungen eine hohe Prozessstabilität und somit zuverlässige Arbeitsweise der Vorrichtung gewährleistet werden. Des Weiteren ist der Container vorteilhafterweise mit einer eigenständigen Energieversorgungseinheit ausgestattet. Somit ist der Betrieb der neuen Vorrichtung unabhängig von den Gegebenheiten vor Ort im Einsatzgebiet möglich. Vorzugsweise wird die Energieversorgungseinheit mit Dieselkraftstoff betrieben, wie er auch im Falle eines Landtransports für die zum Transport benötigten Kraftfahrzeuge verwendet wird.

Bei dem mit der Vorrichtung abzufüllenden Fluid handelt es sich beispielsweise um ein Gas oder um eine Flüssigkeit. Im Falle einer Flüssigkeit kann es sich um aufbereitetes Trinkwasser, Erfrischungsgetränke oder um Säfte handeln. Die Behälter-Vorform und somit der aus dieser geformte Behälter bestehen vorzugsweise aus PET (Polyethylenterephtalat), einem durch Polykondensation hergestellten thermoplastischen Kunststoff aus der Familie der Polyester. Mit der neuen Vorrichtung werden vorzugsweise Flaschen, insbesondere PET-Flaschen, geformt und abgefüllt. Diese Flaschen können ein Aufnahmevolumen von 0,5 Liter, 1 Liter, 1,5 Liter oder 2 Liter aufweisen. Die neue Vorrichtung ist dabei auf einen Durchsatz von bis zu 30.000 PET-Flaschen pro Tag ausgelegt.

Ausführungsbeispiele der Erfindung sind in der Zeichnung dargestellt und werden in der nachfolgenden Beschreibung näher erläutert. Es zeigen:
- Fig. 1: eine schematische Darstellung der Vorrichtung zum automatisierten Formen und Abfüllen von Behältern gemäß einem ersten Ausführungsbeispiel;
- Fig. 2: eine schematische Darstellung einer in der Vorrichtung eingesetzten Einsetzstation;
- Fig. 3: eine schematische Darstellung eines Teilumfangs von in der Fördereinrichtung enthaltenen Behälterträgern;
- Fig. 4: eine Detaildarstellung eines Behälterträgers;
- Fig. 5: eine Schnittdarstellung eines Behälterträgers mit einem darin eingesetzten Behälter;
- Fig. 6: eine schematische Darstellung eines in dem Behälterträger angeordneten Federelements;
- Fig. 7: eine Schnittdarstellung eines Behälterträgers mit einer darin eingesetzten Behälter-Vorform, im Bereich der Erwärmstation befindlich;
- Fig. 8: eine Schnittdarstellung eines Behälterträgers mit einem darin eingesetzten Behälter, im Bereich der Behälterformstation befindlich;
- Fig. 9: eine Schnittdarstellung eines Behälterträgers mit einem darin eingesetzten Behälter, im Bereich der Abfüllstation befindlich; und
- Fig. 10: eine schematische Darstellung der Vorrichtung zum automatisierten Formen und Abfüllen von Behältern gemäß einem zweiten Ausführungsbeispiel.

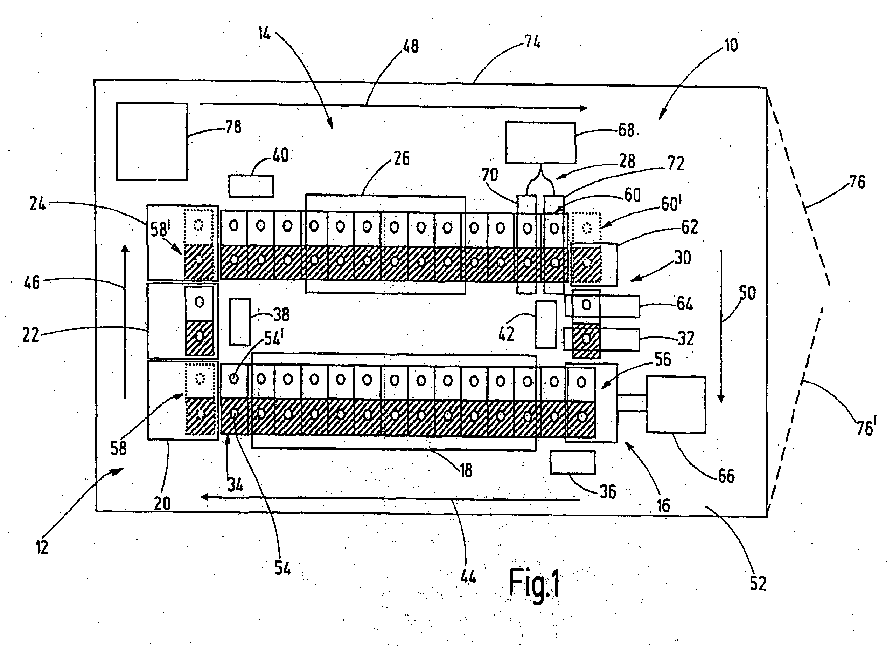

In Fig. 1 ist eine Vorrichtung zum automatisierten Formen und Abfüllen von Behältern in ihrer Gesamtheit mit der Bezugsziffer 10 bezeichnet.

Die Vorrichtung 10 weist eine Vielzahl von Arbeitsstationen 12 und eine Fördereinrichtung 14 auf. Die Arbeitsstationen 12 weisen eine Einsetzstation 16, eine Erwärmstation 18, eine Temperaturprüfstation 20, eine Behälterformstation 22, eine Behälterprüfstation 24, eine Bestrahlungsstation 26, eine Abfüllstation 28, eine Verschließstation 30 und eine Auswerfstation 32 auf. Die Fördereinrichtung 14 weist eine Anzahl von Behälterträgern auf, von denen in Fig. 1 einer exemplarisch mit der Bezugsziffer 34 bezeichnet ist. Ferner weist die Fördereinrichtung 14 eine Anzahl von die Behälterträger 34 bewegenden Bewegungseinheiten auf. Hierbei handelt es sich um eine erste Bewegungseinheit 36, eine zweite Bewegungseinheit 38, eine dritte Bewegungseinheit 40 und um eine vierte Bewegungseinheit 42. Mit der Fördereinrichtung 14 werden eine Behälter-Vorform und ein aus dieser geformter Behälter zwischen den einzelnen Arbeitsstationen 12 bewegt. Hierzu wird der einzelne Behälterträger 34 von der Einsetzstation 16, über die Erwärmstation 18, die Temperaturprüfstation 20, die Behälterformstation 22, die Behälterprüfstation 24, die Bestrahlungsstation 26, die Abfüllstation 28 und die Verschließstation 30 hin zu der Auswerfstation 32 bewegt. Von der Auswerfstation 32 wird er dann wieder zu der Einsetzstation 16 bewegt. Während dieses gesamten Bewegungsablaufes und des damit verbundenen Bearbeitungsablaufs verbleiben die Behälter-Vorform und der aus dieser geformte Behälter in einem definierten Behälterträger 34, nämlich in demjenigen, in den die Behälter-Vorform in der Einsetzstation 1 eingesetzt wird.

Wie der Darstellung in Fig. 1 zu entnehmen ist, bewegt sich der einzelne Behälterträger 34 auf einer geschlossenen, sich aus mehreren Bewegungsabschnitten zusammensetzenden Trajektorie. Mit der ersten Bewegungseinheit 36 wird der Behälterträger 34 entlang einer ersten Bewegungsrichtung 44 bewegt, und zwar ausgehend von der Einsetzstation 16 über die Erwärmstation 18 hin zu der Temperaturprüfstation 20. Mit der zweiten Bewegungseinheit 38 wird der Behälterträger 34 entlang einer zweiten Bewegungsrichtung 46 bewegt, wobei die zweite Bewegungsrichtung 46 im Wesentlichen orthogonal zu der ersten Bewegungsrichtung 44 ausgerichtet ist. Dabei wird der Behälterträger 34 ausgehend von der Temperaturprüfstation 20 über die Behälterformstation 22 hin zu der Behälterprüfstation 24 bewegt. Mit der dritten Bewegungseinheit 40 wird der Behälterträger 34 entlang einer dritten Bewegungsrichtung 48 bewegt, wobei die dritte Bewegungsrichtung 48 im Wesentlichen orthogonal zu der zweiten Bewegungsrichtung 46 ausgerichtet ist. Der Behälterträger 34 wird dabei ausgehend von der Behälterprüfstation 24, über die Bestrahlungsstation 26 und die Abfüllstation 28 hin zu der Verschließstation 30 bewegt. Mit der vierten Bewegungseinheit 42 wird der Behälterträger 34 entlang einer vierten Bewegungsrichtung 50 bewegt, wobei die vierte Bewegungsrichtung 50 im Wesentlichen orthogonal zu der dritten Bewegungsrichtung 48 ausgerichtet ist. Der Behälterträger 34 wird dabei ausgehend von der Verschließstation 30 zu der Auswerfstation 32 bewegt.

Die Bewegungseinheiten 36, 38, 40, 42 sind so ausgebildet, dass der Behälterträger 34 translatorisch bewegt wird. Vorzugsweise handelt es sich bei den Bewegungseinheiten 36, 38, 40, 42 um elektrische Antriebe in Form von Servomotoren. Der einzelne Behälterträger 34 läuft linear auf einer geschlossenen Trajektorie um. Genauer gesagt wird er entlang einer Trajektorie translatorisch verschoben. Dabei bewegt sich der Behälterträger 34 innerhalb einer Bewegungsebene, die im Wesentlichen parallel zu einer Ebene ausgerichtet ist, die durch einen Untergrund 52 definiert ist, auf dem die Arbeitsstationen 12 und die Fördereinrichtung 14 montiert sind.

Es ist auch eine alternative Ausgestaltung der Fördereinrichtung und somit der Vorrichtung denkbar, bei der sich der Behälterträger nicht innerhalb einer einzigen Bewegungsebene bewegt, sondern innerhalb mehrerer Bewegungsebenen, die zueinander im Wesentlichen parallel ausgerichtet sind. D.h. die Fördereinrichtung ist so ausgebildet, dass der Bewegungsträger nicht nur horizontal bewegt werden kann, sondern auch so, dass er eine Höhenänderung erfährt, ausgehend von einer ersten Bewegungsebene hin zu einer zweiten Bewegungsebene. Mit dieser Maßnahme können beispielsweise Einschränkungen in der zur Verfügung stehenden Bauhöhe ausgeglichen werden, wie sie bei der Unterbringung der Arbeitsstationen und der Fördereinrichtung in einem Container auftreten können. Eine Höhenänderung des Behälterträgers kann dadurch realisiert werden, das die Fördereinrichtung ansteigende und/oder abfallende Abschnitte aufweist. So ist es beispielsweise von Vorteil, wenn sich die Behälterträger im Bereich der Einsetstation sehr weit unten, d.h. in einer Bewegungsebene mit geringem Abstand zum Boden des Containers befinden, um beispielsweise ein schwerkraftbedingtes Einsetzen der Behälter-Vorformen in die Behälterträger zu erleichtern. Wohingegen sich die Behälterträger im Bereich der Behälterformstation in einer Bewegungsebene befinden können, die einen größeren Abstand zum Boden des Containers aufweist, als diejenige Bewegungsebene im Bereich der Einsetzstation.

Die Behälterträger 34 weisen jeweils zwei Aufnahmebereiche 54, 54' für die Aufnahme jeweils einer Behälter-Vorform oder eines aus dieser geformten Behälters auf. Dies soll keine einschränkende Wirkung haben. Bei entsprechender Ausgestaltung der Arbeitsstationen können die Behälterträger 34 auch weniger oder mehr als zwei Aufnahmebereiche aufweisen. Durch die Schraffur des Aufnahmebereichs 54 soll verdeutlicht werden, dass der Behälterträger 34 seine Ausrichtung bei der umlaufenden Bewegung beibehält. Die umlaufende Bewegung setzt sich lediglich aus Translationsbewegungsanteilen zusammen und umfasst keinen Rotationsbewegungsanteil.

Die Behälterträger 34 werden getaktet bewegt, was nachfolgend beginnend mit einem mit der Bezugsziffer 56 bezeichneten Behälterträger beschrieben wird. Der Behälterträger 56 befindet sich in der Einsetzstation 16. Nach Einsetzen zweier Behälter-Vorformen wird der Behälterträger 56 entlang der ersten Bewegungsrichtung 44 um eine Position nach links bewegt. Dadurch wird der mit der Bezugsziffer 34 bezeichnete Behälterträger in die Temperaturprüfstation 20 verschoben, was durch einen strichliniert dargestellten Behälterträger 58 angedeutet ist. Mittels der zweiten Bewegungseinheit 38 wird der Behälterträger 58 in einem ersten Takt zunächst von der Temperaturprüfstation 20 in die Behälterformstation 22 und in einem zweiten Takt dann von der Behälterformstation 22 in die Behälterprüfstation 24 jeweils entlang der zweiten Bewegungsrichtung 46 verschoben. Sobald der Behälterträger 58 die Temperaturprüfstation 20 verlassen hat, kann mittels der ersten Bewegungseinheit 36 ein weiterer, sich in der Einsetzstation 16 befindender Behälterträger 56 entlang der ersten Bewegungsrichtung 44 hin zu der Temperaturprüfstation 20 verschoben werden. Mittels der dritten Bewegungseinheit 40 wird der in der Behälterprüfstation 24 befindliche Behälterträger 58' um eine Position nach rechts entlang der dritten Bewegungsrichtung 48 verschoben. Dadurch wird der in der Abfüllstation 28 befindliche Behälterträger 60 in die Verschließstation 30 verschoben, was durch einen strichliniert dargestellten Behälterträger 60' angedeutet ist. Sobald der Behälterträger 58' die Behälterprüfstation 24 verlassen hat, kann der sich in der Behälterformstation 22 befindliche Behälterträger mittels der zweiten Bewegungseinheit 38 in die Behälterprüfstation 24 verschoben werden.

Wie der Darstellung in Fig. 1 zu entnehmen ist, sind die einzelnen Arbeitsstationen 12, was die Anzahl gleichzeitig bearbeitbarer Behälter-Vorformen und Behälter angeht, unterschiedlich ausgebildet. Mit der Einsetzstation 16, der Temperaturprüfstation 20 und der Behälterformstation 22 können gleichzeitig zwei Behälter-Vorformen bearbeitet werden. Mit der Behälterprüfstation 24 und der Abfüllstation 28 können gleichzeitig zwei Behälter bearbeitet werden. Dagegen kann sowohl mit der Verschließstation 30 als auch mit der Auswerfstation 32 jeweils nur ein Behälter bearbeitet werden. Folglich muss sowohl in der Verschließstation 30 als auch in der Auswerfstation 32 die Bearbeitung der Behälter im Vergleich zu den übrigen Arbeitsstationen mit einer doppelt so hohen Taktung erfolgen. Zunächst wird in der Verschließstation 30 der in dem Aufnahmebereich 54 angeordnete Behälter und anschließend der in dem Aufnahmebereich 54' angeordnete Behälter bearbeitet. Entsprechendes gilt für die Auswerfstation 32. Die Verschließstation 30 weist eine Deckelstation 62 und eine Befestigungsstation 64 auf. Sobald der Behälterträger 60' die Deckelstation 62 verlassen hat, wird mittels der dritten Bewegungseinheit 40 der nächste Behälterträger 60 in die Verschließstation 30 nachgeschoben. Der Behälterträger 60' wird mittels der vierten Bewegungseinheit 42 entlang der vierten Bewegungsrichtung 50 über die Auswerfstation 32 hin zu der Einsetzstation 16 verschoben.

Wie bereits vorstehend erläutert, wird mit der Einsetzstation 16 eine Behälter-Vorform aus einem Vorratsbehälter 66 entnommen und durch Einsetzen in einen definierten Behälterträger 56 diesem zugeordnet. Mit der Erwärmstation 18 werden die in den Behälterträgern 34 eingesetzten Behälter-Vorformen für das in der Behälterformstation 22 stattfindende Formen der Behälter, welches unter Temperatur stattfindet, vorgewärmt. Hierfür sind in der Erwärmstation 18 entlang der ersten Bewegungsrichtung 44 nicht dargestellte Heizelemente angebracht. Um eine gleichmäßige Erwärmung der Behälter-Vorformen zu erreichen, werden diese auf ihrem Weg durch die Erwärmstation 18 gedreht. In der Temperaturprüfstation 20 wird geprüft, ob eine Behälter-Vorform eine in einem definierten Temperaturbereich liegende Temperatur aufweist. Der Temperaturbereich definiert dabei diejenigen Temperaturen, die für das in der Behälterformstation 22 stattfindende Formen optimal sind. Liegt die Temperatur der vorgewärmten Behälter-Vorform nicht in dem definierten Temperaturbereich, so wird die Behälter-Vorform in der Temperaturprüfstation 20 ausgesondert. In der Behälterformstation 22 wird aus der Behälter-Vorform ein Behälter geformt, beispielsweise im Streckblasverfahren. Hierbei befindet sich die Behälter-Vorform in einer Fertigblasform, die die Form des Behälters vorgibt. Dabei wird die Behälter-Vorform zunächst mit Druckluft angeblasen, anschließend ein Dorn in die Behälter-Vorform eingeführt und diese gestreckt, und im Anschluss daran mittels Druckluft fertig ausgeblasen. In der Behälterprüfstation 24 wird geprüft, ob der in der Behälterformstation 22 geformte Behälter eine Anzahl definierter Formkriterien erfüllt. Dabei wird beispielsweise geprüft, ob der Behälter regelgerecht ausgebildet ist, d.h. eine definierte Form aufweist. Auch kann geprüft werden, ob der geformte Behälter in seiner Seitenwand oder in seinem Boden ein Loch aufweist. Erfüllt der geformte Behälter eines der Formkriterien nicht, wird er in der Behälterprüfstation 24-ausgesondert. Durch das in der Temperaturprüfstation 20 und das in der Behälterprüfstation 24 jeweils stattfindende Aussondern können Schäden in einzelnen Arbeitsstationen 12 und somit Dauerstörungen vermieden werden.

In der Bestrahlungsstation 26 wird der geformte Behälter zumindest teilumfänglich mit UV-Strahlung bestrahlt. Vorzugsweise wird der geformte Behälter in seinem Halsbereich bestrahlt, um dort gegebenenfalls befindliche Keime abzutöten. Diese Maßnahme wird deshalb durchgeführt, da der Halsbereich der Behälter-Vorform und des aus dieser geformten Behälters in der Behälterformstation 22 nicht den Temperaturen ausgesetzt ist, wie dies für den Rumpfbereich des Behälters der Fall ist. Aufgrund der in der Behälterformstation 22 vorherrschenden hohen Temperaturen sind eventuell im Rumpfbereich des Behälters befindliche Keime bereits abgetötet.

In der Abfüllstation 28 wird ein in einem Fluidbehälter 68 befindliches Fluid in den geformten Behälter abgefüllt. Bei dem Fluid kann es sich um ein Gas oder um eine Flüssigkeit handeln. Vorzugsweise handelt es sich um aufbereitetes Trinkwasser. Vorteilhafterweise ist die Abfüllstation 28 zweistufig aufgebaut und besteht aus einer Vorfüllstation 70 und einer Fertigfüllstation 72. Mit der Vorfüllstation 70 wird ein erstes Volumen des Fluids unter höherem Druck in den Behälter eingefüllt. Mit der Fertigfüllstation 72 wird ein zweites Volumen mit geringerem Druck in den Behälter eingefüllt. Vorzugsweise beträgt das erste Volumen 80 % des Endvolumens und das zweite Volumen 20 % des Endvolumens. Es ist aber auch eine andere Aufteilung zwischen diesen beiden Volumina denkbar. Anstelle des zweistufigen Aufbaus ist es auch denkbar, die Abfüllstation lediglich einstufig aufzubauen.

Mit der Deckelstation 62 wird ein Deckel auf den abgefüllten Behälter aufgesetzt. Dieser wird dann mit der Befestigungsstation 64 an dem Behälter lösbar befestigt. Vorzugsweise sind der Deckel als Schraubdeckel und die Befestigungsstation 64 als Schraubstation ausgeführt. Vorteilhafterweise ist die Deckelstation 64 zudem dazu ausgebildet, ein Etikett auf dem abgefüllten Behälter anzubringen. Mit der Auswerfstation 32 wird der verschlossene Behälter aus dem Behälterträger 34 ausgeworfen. Dies kann aktiv, beispielsweise durch einen von oben auf den Behälter wirkenden Stößel erfolgen. Alternativ kann dies auch passiv erfolgen, wenn der Behälterträger 34 so ausgebildet ist, dass der gefüllte Behälter schwerkraftbedingt von allein nach unten aus diesem ausfällt.

Mit Blick auf einen vollständigen Herstellungsprozess, der mit dem Formen eines Behälters aus einer Behälter-Vorform beginnt und über das Abfüllen des Behälters bis hin zum Auswerfen des Behälters reicht, umfasst die Vorrichtung 10 mindestens eine Einsetzstation 16, eine Behälterformstation 22, eine Abfüllstation 28, eine Verschließstation 30 und eine Auswerfstation 32.

Für einen mobilen Einsatz der Vorrichtung 10 sind die Arbeitsstationen 12 und die Fördereinrichtung 14 stationär in einem Container 74 angeordnet. Dieser Container 74 ist vorzugsweise als 20-Fuß-Container ausgebildet und begehbar, was durch geöffnete Türen 76, 76' angedeutet ist. Um optimale Prozessstabilität zu gewährleisten, ist in dem Container 74 eine Kühleinheit 78 angeordnet. Auf die Darstellung einer Energieversorgungseinheit, mit der die Arbeitsstationen 12 und die Fördereinrichtung 14 mit Energie versorgt werden, wurde in Fig. 1 verzichtet.

Die schematische Darstellung in Fig. 1 soll keine einschränkende Wirkung hinsichtlich einer konkreten konstruktiven Ausgestaltung der Vorrichtung oder einzelner Komponenten derselben haben. Dies gilt insbesondere auch für die Anzahl der in den einzelnen Arbeitsstationen bearbeitbaren Behälter-Vorformen und Behälter. So können gegenüber den dargestellten Arbeitsstationen modifizierte Arbeitsstationen eingesetzt werden, mit denen eine andere Anzahl von Behälter-Vorformen oder Behälter bearbeitet werden können. Auch können von einem Typ von Arbeitsstation mehrere Exemplare parallel eingesetzt werden. Beispielsweise ist es denkbar, mehrere Behälterformstationen parallel zusammen einzusetzen, wobei eine entsprechend abgeänderte Erwärmstation und gegebenenfalls mehrere Abfüllstationen zum Einsatz kommen. Entsprechend können auch modifizierte Deckelstationen, Befestigungsstationen und Abfüllstationen eingesetzt werden. Die Vorrichtung kann je nach erforderlicher Taktzeit der einzelnen an den Arbeitsstationen durchzuführenden Herstellung- bzw. Arbeitsschritte individuell konfiguriert werden.

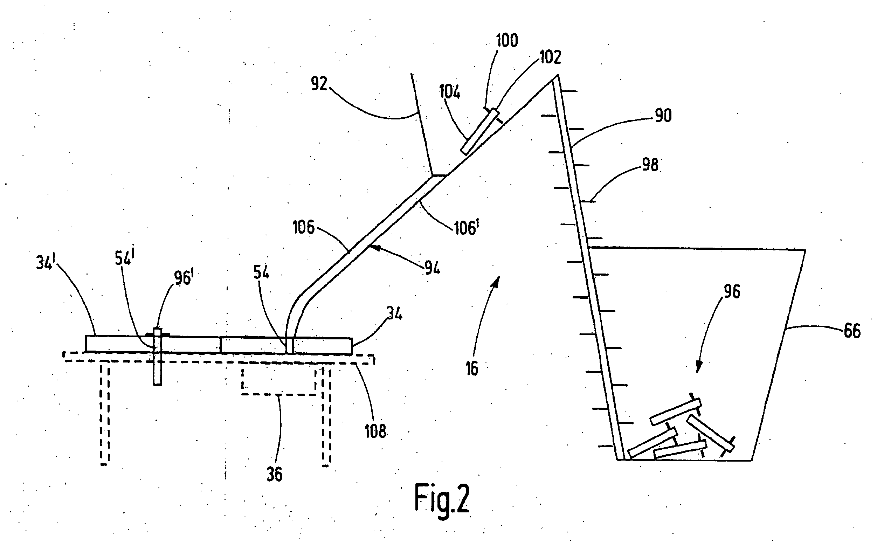

In Fig. 2 ist die Einsetzstation 16 dargestellt. Die Einsetzstation 16 besteht aus einer Transporteinheit 90, einem Trichterelement 92 und einer Förderstrecke 94. In dem Vorratsbehälter 66 befindet sich eine Anzahl von Behälter-Vorformen 96. Die Behälter-Vorformen 96 werden über die Transporteinheit 90 in das Trichterelement 92 befördert. Hierzu ist die Transporteinheit 90 beispielsweise als umlaufendes Förderband mit Mitnahmevorsprüngen ausgebildet, von denen einer exemplarisch mit der Bezugsziffer 98 bezeichnet ist.

Wie in Fig. 2 angedeutet, weist die Behälter-Vorform 96 einen Kragen 100 auf, der die Behälter-Vorform 96 in einen Halsbereich 102 und einen Rumpfbereich 104 unterteilt. Aufgrund der auf die Behälter-Vorform 96 wirkenden Schwerkraft richtet sich die Behälter-Vorform 96 in dem Trichterelement 92 so aus, dass sie das Trichterelement 92 mit dem Rumpfbereich 104 voran verlässt. Die BehälterVorform 96 hängt sich nach Verlassen des Trichterelements 92 selbsttätig in die Förderstrecke 94 ein. Die Förderstrecke 94 besteht vorzugsweise aus zwei parallel verlaufenden Schienen 106, 106', die ausgehend von dem Trichterelement 92 nach unten in Richtung des zu bestückenden Behälterträgers 34 gerichtet sind. Die Behälter-Vorform 96 stützt sich mit ihrem Kragen 100 auf den beiden Schienen 106, 106' ab, wobei ihr Rumpfbereich 104 nach unten in Richtung des Behälterträgers 34 zeigt. Die Behälter-Vorform hängt somit senkrecht zwischen den links und rechts von ihr angeordneten Schienen 106, 106'. Über die Förderstrecke 94 wird die Behälter-Vorform 96 dem Behälterträger 34 zugeführt und in dessen Aufnahmebereich 54 eingesetzt. Links neben dem zu bestückenden Behälterträger 34 ist ein bereits bestückter Behälterträger 34' dargestellt, in dessen Aufnahmebereich 54' eine Behälter-Vorform 96' eingesetzt ist. Die Einsetzstation 16 ist so ausgebildet, dass in beide Aufnahmebereiche 54, 54' des Behälterträgers 34 Behälter-Vorformen eingesetzt werden können. Hierfür weist die Einsetzstation 16 beispielsweise eine zweite, in Fig. 2 nicht dargestellte Förderstrecke 94' auf. Alternativ kann der Trichter 92 schwenkbar ausgebildet sein, so Behälter-Vorformen abwechselnd in die beiden Aufnahmebereiche 54, 54' eingesetzt werden könne. Auf die Darstellung eines entsprechenden Schwenkmechanismus in Fig. 2 wurde verzichtet.

Mittels der Einsetzstation 16 werden die in dem Vorratsbehälter 66 befindlichen Behälter-Vorformen 96 vereinzelt. Die Förderstrecke 94 kann mit einem Trennelement ausgestattet sein, mit dem in der Förderstrecke 94 aufgestaute Behälter-Vorformen 96 zum Einsetzen in den Behälterträger 34 voneinander getrennt und somit einzeln in Richtung des zu bestückenden Behälterträgers 34 durchgelassen werden. Mittels der Einsetzstation 16 werden die Behälter-Vorformen 96 durch eine schwerkraftbedingte Bewegung von oben in den Behälterträger 34 eingesetzt. Sobald in beiden Aufnahmebereichen 54, 54' des Behälterträgers 34 Behälter-Vorformen 96 eingesetzt sind, wird dieser in Richtung Erwärmstation 18 und Temperaturprüfstation 20 verschoben. Hierzu wird der auf einem Führungsgestell 108 befindliche Behälterträger 34 mittels der ersten Bewegungseinheit 36 verschoben. Wie in Fig. 2 angedeutet, werden die Behälterträger 34 entlang sämtlicher Bewegungsrichtungen 44, 46, 48, 50 auf einem Führungsgestell 108 verschoben. Um ein seitliches Herabfallen der Behälterträger 34 zu verhindern, ist das Führungsgestell 108 mit nicht dargestellten seitlichen Führungsschienen ausgestattet.

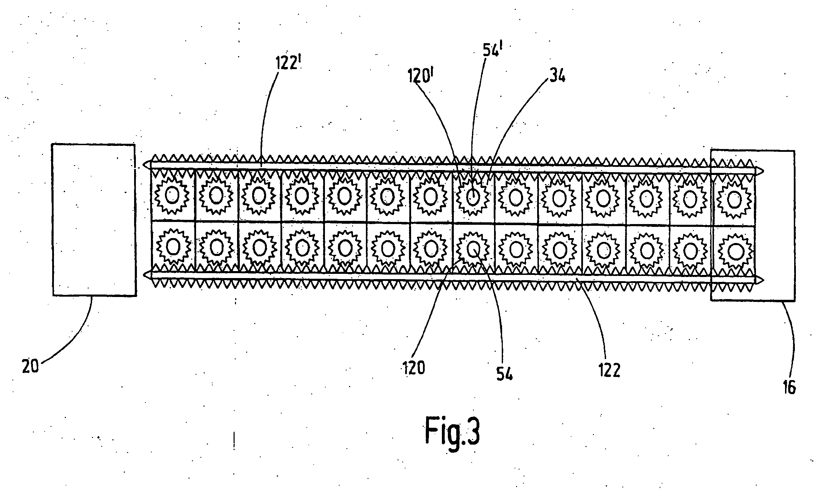

In Fig. 3 sind die zwischen der Einsetzstation 16 und der Temperaturprüfstation 20 angeordneten Behälterträger in detaillierterer Form dargestellt, wobei einer dieser Behälterträger exemplarisch mit der Bezugsziffer 34 bezeichnet ist. Jeder der Behälterträger 34 weist zwei Zahnräder 120, 120' auf, die jeweils konzentrisch zu einem der beiden Aufnahmebereiche 54, 54' angeordnet sind. Das Zahnrad 120 greift in ein Zahnungselement 122, und das Zahnrad 120' greift in ein Zahnungselement 122' ein. Die beiden Zahnungselemente 122, 122' sind seitlich an einem aufgrund der Darstellung in Fig. 3 nicht zu sehenden Führungsgestell 108 angeordnet. Das Zusammenwirken der Zahnräder 120, 120' mit dem jeweiligen Zahnungselement 122, 122' bewirkt beim Bewegen des Behälterträgers 34 ein Drehen des jeweiligen Zahnrads 120, 120' und somit auch der in dem jeweiligen Aufnahmebereich 54, 54' angeordneten Behälter-Vorform 96, 96'. Dadurch wird beim Bewegen des Behälterträgers 34 entlang der ersten Bewegungsrichtung 44, d.h. bei seiner Bewegung durch die Erwärmstation 18, eine permanente Drehung der Behälter-Vorform 96 erreicht, was zu einer gleichmäßigen Erwärmung derselben führt. Die Drehbewegung, die die Behälter-Vorform 96 dabei in Bezug auf den Behälterträger 34 ausführt, stellt keine Relativbewegung im Sinne einer Übergabebewegung oder einer Umgreifbewegung dar. Die beiden Zahnungselemente 122, 122' können beispielsweise als starre Zahnstangen oder als flexible, umlaufende Zahnriemen ausgebildet sein. Im Fall der Zahnstangen wird die Behälter-Vorform 96, 96' aufgrund einer Relativbewegung gedreht, die sich beim Bewegen des Behälterträgers 34 zwischen dem Zahnrad 120, 120' und der jeweiligen Zahnstange einstellt. Im Fall der Zahnriemen kann die Behälter-Vorform 96, 96' zusätzlich durch ein Umlaufen des Zahnriemens gedreht werden, wodurch eine gleichmäßigere Erwärmung der Behälter-Vorform 96, 96' möglich ist. Die Behälter-Vorformen 96, 96' können auch dann bewegt werden, wenn der Behälterträger 34 selbst keine Bewegung ausführt. In Fig. 3 wurde auf die Darstellung der Erwärmstation 18 verzichtet. Aufgrund der höheren Zuverlässigkeit sind die beiden Zahnungselemente 122, 122' bevorzugt als Zahnstangen ausgebildet.

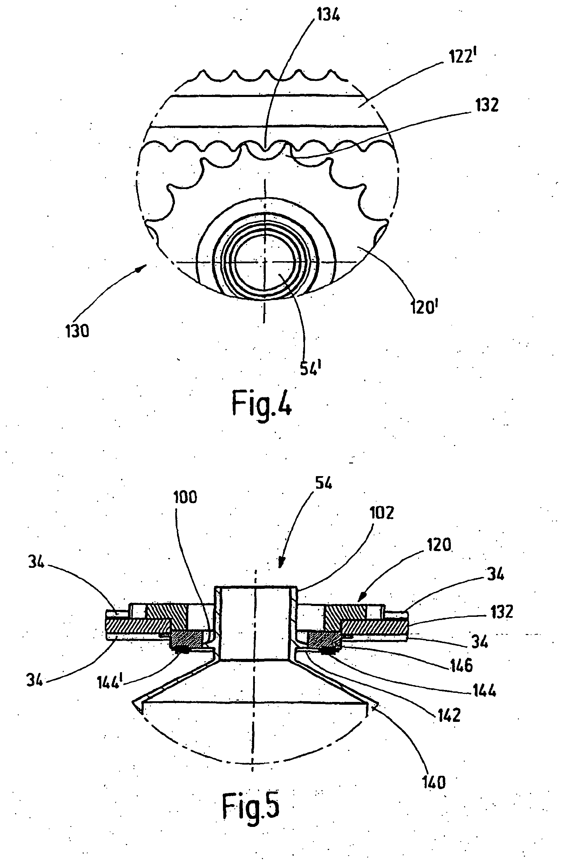

Fig. 4 zeigt in einer Detaildarstellung einen Ausschnitt 130 des Behälterträgers 34. Der Ausschnitt 130 zeigt das Zusammenwirken von Zahnradzähnen 132 des Zahnrads 120' mit Zahnungselementzähnen 134 des Zahnungselements 122'. Die Behälter-Vorform und der Behälter sind somit drehbar in dem Behälterträger gelagert.

Fig. 5 zeigt in einer Schnittdarstellung einen Behälter 140, der in einem Aufnahmebereich 54 eines Behälterträgers 34 eingesetzt ist. Der Behälter 140 weist in seinem Halsbereich 102 einen Kragen 100 auf, mit dem er auf einem Federelement 142 aufliegt. Das Federelement 142 ist über Befestigungselemente 144, 144' an einem Montageelement 146 des Behälterträgers 34 befestigt. Vorzugsweise ist das Federelement 142 lösbar befestigt, so dass es bei Bedarf ausgetauscht werden kann. An dem Montageelement 146 ist auch das Zahnrad 120 befestigt. Das Federelement 142 ist so ausgebildet, dass einerseits eine von oben in das Federelement 142 eingesetzte Behälter-Vorform 96 gehalten wird. Andererseits ermöglicht das Federelement 142 das Entnehmen eines gefüllten und später verschlossenen Behälters 140 nach unten. Dabei ist das Federelement 142 vorzugsweise so dimensioniert, dass ein gefüllter Behälter 140 schwerkraftbedingt von allein nach unten ausfallen kann. Aus Gründen der Übersichtlichkeit wurde in Fig. 5 auf die Darstellung eines Gewindes im Halsbereich 102 des Behälters 140 verzichtet.

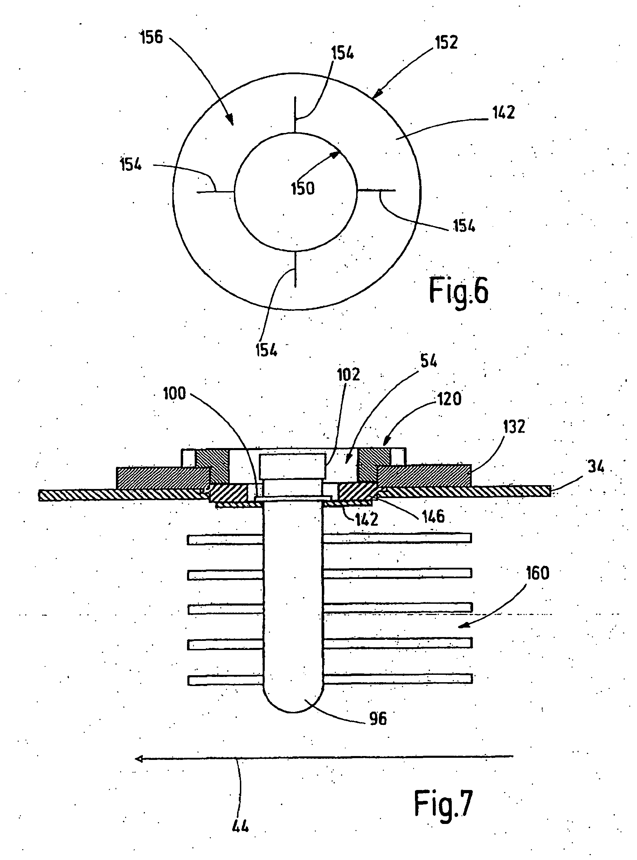

In Fig. 6 ist das Federelement 142 dargestellt. Es handelt sich hierbei um eine dünne ringförmige Scheibe, mit einem Innenrand 150 und einem Außenrand 152. Der Innenrand 150 weist dabei einen solchen Durchmesser auf, dass sowohl eine Behälter-Vorform 96 als auch ein Behälter 140 ohne allzu großes Spiel durch Untergreifen des jeweiligen Kragens 100 durch das Federelement 142 gehalten wird. Die Scheibe weist eine Vielzahl von Schlitzen 154 auf, wobei Schlitze 154 beginnend an dem Innenrand 150 über einen Teil der Ringbreite 156 hin zu dem Außenrand 152 verlaufen. Insgesamt ist der Innenrand 150 der Scheibe so ausgebildet, dass eine von oben eingesetzte Behälter-Vorform 96 durch Untergreifen ihres Kragens 100 gehalten wird, und ein gefüllter Behälter 140 nach unten aus dem Federelement 142 und somit dem Behälterträger 34 entnehmbar ist. Auf die Darstellung von Löchern zum Zweck der Befestigung des Federelement 142 an dem Montageelement 146 mittels Befestigungselementen 144, 144' wurde verzichtet. Die Darstellung von geradlinig verlaufenden Schlitzen 154 soll keine einschränkende Wirkung haben. Die Schlitze können eine beliebige Form aufweisen; beispielsweise können sie bogenförmig ausgebildet sein.

Fig. 7 zeigt einen Behälterträger 34 in einer gegenüber der Darstellung in Fig. 5 leicht modifizierten Ausführungsform. In den Behälterträger 34 ist eine Behälter-Vorform 96 eingesetzt, die von einem Federelement 142 durch Untergreifen des Kragens 100 gehalten wird. Das Federelement 142 ist über ein Montageelement 146 an dem Behälterträger 34 befestigt. An dem Montageelement 146 ist ebenfalls ein Zahnrad 120 befestigt. Auf die Darstellung von Befestigungselementen 144, 144' wurde verzichtet. Das Montageelement 146 wird mit einem Sicherungselement, das in einer umlaufenden Nut am Montagelement 146 unterhalb des Behälterträgers 34 angebracht ist, in Längsrichtung fixiert. Die Längsrichtung ist dabei durch die Drehachse der Behälter-Vorform definiert. Durch Lösen des Sicherungselements kann das Montagelement 146 leicht ausgetauscht werden. Bei dem Sicherungselement kann es sich beispielsweise um einem Sägering handeln.

Der Behälterträger 34 und somit die in ihm eingesetzte Behälter-Vorform 96 werden entlang der ersten Bewegungsrichtung 44 an in der Erwärmstation 18 angeordneten Heizelementen 160 vorbeibewegt. Die Heizelemente 160 können dabei beispielsweise als elektrisch betriebene Heizstäbe ausgebildet sind. Dabei können Heizstäbe zum Einsatz kommen, deren Länge der Länge der Erwärmstation 18 entspricht. Es ist aber auch denkbar, mehrere kürzere Heizstäbe hintereinander über die gesamte Länge der Erwärmstation 18 anzuordnen.

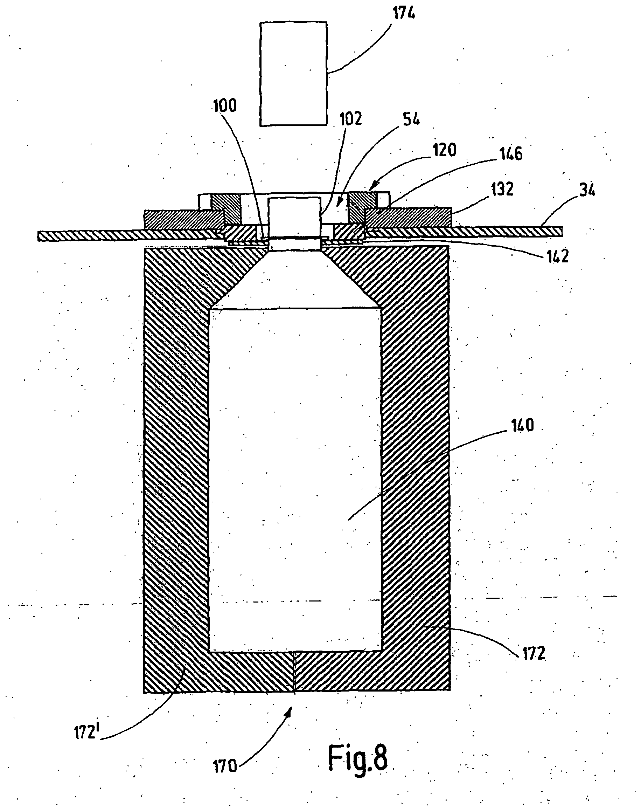

In Fig. 8 ist ein in einem Behälterträger 34 angeordneter Behälter 140 dargestellt, der sich in der Behälterformstation 22 befindet. Der Behälterträger 34 entspricht in seinem Aufbau dem in Fig. 7 dargestellten Behälterträger. Der Behälter 140 wird durch Untergreifen seines Kragens 100 von dem Federelement 142 getragen. In der Behälterformstation 22 wird der Behälter 140 aus einer Behälter-Vorform 96 geformt. Dies erfolgt in einem so genannten Streckblasverfahren. Dabei wird in einem ersten Schritt zunächst eine kleine Menge Druckluft in die Behälter-Vorform 96 eingeleitet und in einem zweiten Schritt ein Dorn in die Behälter-Vorform 96 eingeführt, um diese zu strecken. In einem dritten Schritt wird dann schließlich eine große Menge Druckluft in die gestreckte Behälter-Vorform eingeleitet und diese zu dem Behälter 140 fertig ausgeblasen. Fig. 8 zeigt den fertig ausgeblasenen Behälter 140, der sich noch in einer Fertigblasform 170 befindet, die aus zwei Formhälften 172, 172' besteht. Vorzugsweise sind die beiden Formhälften 172, 172' beheizbar ausgeführt. Mit der Bezugsziffer 174 ist eine Zuführung bezeichnet. Über diese Zuführung 174 wird zum einen Druckluft in die Behälter-Vorform 96 eingeleitet. Zum anderen wird über diese Zuführung 174 auch der Dorn zum Strecken der Behälter-Vorform 96 eingeführt.

Die beiden Formhälften 172, 172' sind beweglich ausgeführt. Sie können jeweils horizontal, und zwar quer zur Vorschubrichtung der Behälter-Vorform bzw. der Behälter bewegt werden. Während der Vorschubbewegung der Behälter-Vorformen in die Behälterformstation hinein und während der Vorschubbewegung der Behälter aus der Behälterformstation heraus sind die beiden Formhälften 172, 172' in einer Offenposition angeordnet und geben somit den Weg für die Behälter-Vorformen bzw. die Behälter frei.

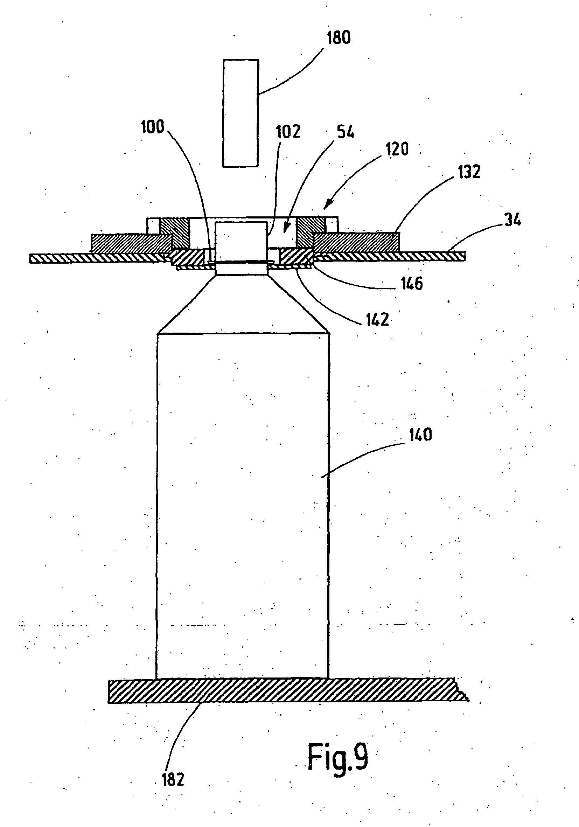

Fig. 9 zeigt einen in einen Behälterträger 34 eingesetzten Behälter 140, der sich in der Abfüllstation 28 befindet. Der Behälterträger 34 entspricht in seinem Aufbau den Behälterträgern, die in den Fig. 7 und 8 dargestellt sind. In der Abfüllstation 28 wird über einen Einfüllstutzen 180 ein Fluid in den Behälter 140 eingefüllt. Die Darstellung in Fig. 9 lässt dabei offen, ob sich der Behälter 140 in der Vorfüllstation 70 oder in der Fertigfüllstation 72 befindet.

Wie bereits oben ausgeführt, kann die Auswerfstation 32 und demzufolge auch das Federelement 142 gemäß zweier unterschiedlicher Ansätze ausgebildet sein. Gemäß einem ersten Ansatz ist die Auswerfstation 32 als passive Auswerfstation ausgebildet. Dabei ist das Federelement 142 so dimensioniert, dass der gefüllte Behälter 140 in der Auswerfstation 32 schwerkraftbedingt von allein nach unten aus dem Behälterträger 34 herausfällt. Das heißt, in der Auswerfstation 32 muss nicht aktiv auf den gefüllten Behälter 140 eingewirkt werden, um diesen aus dem Behälterträger 34 zu entnehmen. In diesem Fall ist beginnend mit der Abfüllstation 28 eine Führungsplatte 182 vorzusehen, die unterhalb des abzufüllenden Behälters 140 angeordnet ist, damit nach Beenden des Abfüllvorgangs der Behälter 140 nicht bereits in der Abfüllstation 28 von allein schwerkraftbedingt nach unten aus dem Behälterträger 34 ausfällt. Die Führungsplatte 182 erstreckt sich von der Abfüllstation 28 über die Verschließstation 30 bis hin zur Auswerfstation 32. Gemäß einem zweiten Ansatz ist die Auswerfstation 32 als aktive Auswerfstation ausgeführt. In diesem Fall muss das Federelement 142 nicht so dimensioniert sein, dass der gefüllte Behälter 140 schwerkraftbedingt von allein nach unten aus dem Behälterträger 34 herausfällt. Stattdessen wird in der Auswerfstation 32 aktiv, beispielsweise mittels eines Stößels auf den Behälter 140 eingewirkt, um diesen durch Aufbringen einer Kraft nach unten aus dem Federelement 142 und somit dem Behälterträger 34 herauszudrücken. In diesem Fall ist besagte Führungsplatte 182 nicht erforderlich.

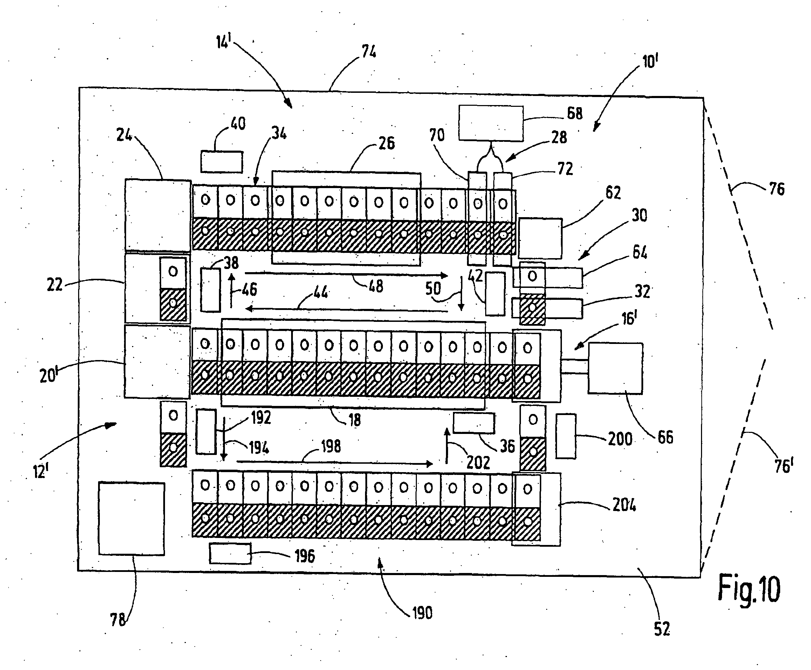

In Fig. 10 ist eine Vorrichtung 10' zum automatisierten Formen und Abfüllen von Behältern gemäß einem zweiten Ausführungsbeispiel dargestellt.

Die in Fig. 10 dargestellte Vorrichtung 10' unterscheidet sich von der in Fig. 1 dargestellten Vorrichtung 10 dadurch, dass die Vorrichtung 10' zusätzlich einen Rückführungszweig 190 aufweist. Mit dem Rückführungszweig 190 kann eine Behälter-Vorform 96, für die in der Temperaturprüfstation 20' festgestellt wurde, dass deren Temperatur nicht in dem definierten Temperaturbereich liegt, der Einsetzstation 16' zugeführt werden. Hierzu umfasst die Fördereinrichtung 14' eine fünfte Bewegungseinheit 192, mit der ein Behälterträger 34 entlang einer fünften Bewegungsrichtung 194 bewegt werden kann. Die fünfte Bewegungsrichtung 194 ist dabei im Wesentlichen orthogonal zu der ersten Bewegungsrichtung 44 und antiparallel zu der zweiten Bewegungsrichtung 46 ausgerichtet. Ferner umfasst die Fördereinrichtung 14' eine sechste Bewegungseinheit 196, mit der ein Behälterträger 34 entlang einer sechsten Bewegungsrichtung 198 bewegt werden kann, wobei die sechste Bewegungsrichtung 198 im Wesentlichen orthogonal zu der fünften Bewegungsrichtung 194 ausgerichtet ist. Ferner weist die Fördereinrichtung 14' eine siebte Bewegungseinheit 200 auf, mit der ein Behälterträger 34 entlang einer siebten Bewegungsrichtung 202 bewegt werden kann, wobei die siebte Bewegungsrichtung 202 im Wesentlichen orthogonal zu der sechsten Bewegungsrichtung 198 ausgerichtet ist.

Mittels der Bewegungseinheiten 192, 196, 200 kann ein Behälterträger 34 ausgehend von der Temperaturprüfstation 20' über eine Auswerfstation 204 hin zu der Einsetzstation 16' bewegt werden. In der Auswerfstation 204 wird eine in dem Behälterträger 34 befindliche Behälter-Vorform 96, deren Temperatur nicht in dem definierten Temperaturbereich liegt, aus dem Behälterträger 34 entfernt. Dabei ist es für den Fall denkbar, dass die Behälter-Vorform 96 aufgrund der nicht richtigen Erwärmung keinen Schaden genommen hat, diese erneut dem Herstellungsprozess zuzuführen und somit in den Vorratsbehälter 66 zu geben. Vorzugsweise erfolgt über den Rückführungszweig 190 auch bei Störungen in der Behälterformstation 20' ober bei Störungen in der Abfüllstation 28.

In Fig. 10 dargestellte Komponenten, die in Aufbau und Funktion einer in Fig. 1 dargestellten Komponente entsprechen, sind mit derselben Bezugsziffer gekennzeichnet und werden deswegen nicht weiter beschrieben. Statt dessen wird auf die Ausführungen im Zusammenhang mit Fig. 1 verwiesen.

Entgegen der Darstellung in Fig. 10 ist es denkbar, anstelle einer eigenständigen zweiten Bewegungseinheit 38 und einer eigenständigen fünften Bewegungseinheit 192, eine einzige Bewegungseinheit vorzusehen, die für einen Behälterträger 34 sowohl eine Bewegung in zweiter Bewegungsrichtung 46 als auch in fünfter Bewegungsrichtung 194 ermöglicht. Entsprechendes gilt für die vierte Bewegungseinheit 42 und die siebte Bewegungseinheit 200. Ferner ist ein alternativer Aufbau des Rückführungszweiges 190 denkbar. Der alternative Rückführungsweise ist bogenförmig ausgebildet. Vorzugsweise bewegen sich die Behälterträger in dem Rückführungszweig 190 auf einer halbreisförmigen Trajektorie. Alternativ kann die Trajektorie aus zwei Vierteilkreisbahnen bestehen, die über eine geraden Bahnabschnitt miteinander verbunden sind. Der bogenförmig ausgebildete Rückführungszweig 190 hat den Vorteil, dass nicht drei Bewegungseinrichtungen, sondern lediglich eine benötigt wird. Außerdem werden für die Rückführung weniger Behälterträger benötigt.

Für die in Fig. 1 und in Fig. 10 dargestellten Vorrichtungen stellt sich der Regelbetrieb wie folgt dar: Einsetzen einer Behälter-Vorform, Erwärmen der Behälter-Vorform, Streckblasen der Behälter-Vorform zu einem Behälter, Befüllen des Behälters, Verschließen des Behälters, Etikettieren des Behälters und Auswerfen des etikettierten und geschlossenen Behälters.

Für die Vorrichtung 10 stellt sich bei einer in der Temperaturprüfstation 20 festgestellten Störung der Betrieb wie folgt dar: die als fehlerhaft befundene Behälter-Vorform wird direkt ohne Rückführung an der Temperaturprüfstation 20 ausgesondert. Bei der Vorrichtung 10' wird die als fehlerhaft befundene Behälter-Vorform zwar auch in der Temperaturprüfstation 20' ausgesondert, jedoch über den Rückführungszweig einer Auswerfstation 204 zugeführt, womit es möglich ist, diese Behälter-Vorform gegebenenfalls wieder dem Herstellungsprozess durch Einsetzen in der Einsetzstation 16'zuzuführen.

Bei einer in der Behälterprüfstation 24 festgestellten Störung wird sowohl bei der Vorrichtung 10 als auch bei der Vorrichtung 10' der als fehlerhaft befundene Behälter direkt an der Behälterprüfstation 24 ohne Rückführung ausgesondert. Außerdem wird in einem Speicher abgespeichert, welcher Behälterträger ohne Behälter weiterbewegt wird, damit kann an den nachfolgenden Arbeitsstationen das Ausführen von Arbeitsschritten unterbleiben.

Mit der neuen Vorrichtung können insbesondere Flaschen an definierter und durch den Flaschenherstellprozess unveränderter Position, nämlich dem im Halsbereich befindlichen Kragen, in einem Flaschenträger aufgenommen und durch die komplette Anlage zur Flaschenherstellung und Flaschenabfüllung geführt werden. Innerhalb der kompletten Flaschenherstellung und Abfüllung sind abgesehen von der Einsetzstation und der Auswerfstation keine Übergabestationen erforderlich. Die Vorrichtung ist somit greiferlos ausgebildet. In einer Flaschenblasstation hergestellte fehlerhafte Flaschen können detektiert und ausgesondert werden. Somit führen diese nicht zu einem Stillstand der Anlage. Insgesamt führen Funktionsstörungen im Bereich der Flaschenblasstation oder im Bereich der Flaschenabfüllstation nicht zu Störungen bzw. Schäden in einem anderen Anlageteil.

An dieser Stelle sei bemerkt, dass die in den Figuren teilweise schematisierte Darstellung keinerlei Einschränkung für die konkrete bauliche Ausgestaltung einzelner in der Vorrichtung verbauter Komponenten, wie beispielsweise einzelner Arbeitsstationen oder der Fördereinrichtung oder Komponenten derselben haben soll. Auch soll die in den Figuren teilweise unterschiedlich große Darstellung ein und derselben Komponente keine einschränkende Wirkung haben.

## Patentansprüche

1. Vorrichtung zum automatisierten Formen und Abfüllen von Behältern (140), mit einer Vielzahl von Arbeitsstationen (12, 12') und einer Fördereinrichtung (14, 14'), wobei die Arbeitsstationen (12, 12') zumindest eine Behälterformstation (22), eine Abfüllstation (28) und eine Verschließstation (30) aufweisen, wobei die Behälterformstation (22) dazu ausgebildet ist, aus einer Behälter-Vorform (96) einen Behälter (140) zu formen, wobei die Abfüllstation (28) dazu ausgebildet ist, ein Fluid in den geformten Behälter (140) abzufüllen, wobei die Verschließstation (30) dazu ausgebildet ist, den abgefüllten Behälter (140) zu verschließen, und wobei die Fördereinrichtung (14, 14') dazu ausgebildet ist, die Behälter-Vorform (96) und den Behälter (140) zwischen den einzelnen Arbeitsstationen (12, 12') zu bewegen, wobei die Fördereinrichtung (14, 14') eine Anzahl von Behälterträgern (34, 56, 58, 60) und eine Anzahl von die Behälterträger bewegenden Bewegungseinheiten (36, 38, 40, 42, 192, 196, 200) aufweist, und die Arbeitsstationen (12, 12') ferner eine Einsetzstation (16, 16') und eine Auswerfstation (32) aufweisen, wobei die Einsetzstation (16, 16') dazu ausgebildet ist, die Behälter-Vorform (96) einem definierten Behälterträger (56) zuzuordnen, wobei die Auswerfstation (32) dazu ausgebildet ist, den Behälter (140) aus dem Behälterträger (56) auszuwerfen, wobei die Fördereinrichtung (14, 14') dazu ausgebildet ist, den Behälterträger (34) von der Einsetzstation (16) über die Behälterformstation (22), die Abfüllstation (28) und die Verschließstation (30) zu der Auswerfstation (32) zu bewegen, und wobei die Behälter-Vorform (96) und der aus dieser geformte Behälter (140) durchgehend in dem der Behälter-Vorform (96) zugeordneten Behälterträger (56) verbleiben, **dadurch gekennzeichnet, dass** die Arbeitsstationen (12, 12') ferner zumindest eine Erwärmstation (18) aufweisen, die dazu ausgebildet ist, eine Behälter-Vorform (96) für das anschließende, in der Behälterformstation (22) erfolgende Formen des Behälters (140) vorzuwärmen, und **gekennzeichnet durch** einen transportablen Container (74), in dem die Arbeitsstationen (12, 12') und die Fördereinrichtung (14, 14') stationär angeordnet sind.

2. Vorrichtung nach Anspruch 1, **dadurch gekennzeichnet, dass** die Bewegungseinheiten (36, 38, 40, 42, 192, 196, 200) dazu ausgebildet sind, den Behälterträger (34) auf einer geschlossenen Trajektorie (44, 46, 48, 50) zu bewegen.

3. Vorrichtung nach Anspruch 1 oder 2, **dadurch gekennzeichnet, dass** die Fördereinrichtung (14, 14') eine erste und eine zweite Bewegungseinheit (36, 38) aufweist, wobei die erste Bewegungseinheit (36) dazu ausgebildet ist, den Behälterträger (34) entlang einer ersten Bewegungsrichtung (44) zu bewegen, wobei die zweite Bewegungseinheit (38) dazu ausgebildet ist, den Behälterträger (34) entlang einer zweiten Bewegungsrichtung (46) zu bewegen, und wobei die zweite Bewegungsrichtung (46) im Wesentlichen orthogonal zu der ersten Bewegungsrichtung (44) ausgerichtet ist.

4. Vorrichtung nach Anspruch 3, **dadurch gekennzeichnet, dass** die Fördereinrichtung (14, 14') eine dritte Bewegungseinheit (40) aufweist, die dazu ausgebildet ist, den Behälterträger (34) entlang einer dritten Bewegungsrichtung (48) zu bewegen, wobei die dritte Bewegungsrichtung (48) im Wesentlichen orthogonal zu der zweiten Bewegungsrichtung (46) ausgerichtet ist.

5. Vorrichtung nach einem der Ansprüche 1 bis 4, **dadurch gekennzeichnet, dass** die Bewegungseinheiten (36, 38, 40, 42, 192, 196, 200) dazu ausgebildet sind, die Behälterträger (34) translatorisch zu bewegen.

6. Vorrichtung nach einem der Ansprüche 1 bis 5, **dadurch gekennzeichnet, dass** die Bewegungseinheiten (36, 38, 40, 42, 192, 196, 200) dazu ausgebildet sind, die Behälterträger (34) im wesentlichen innerhalb einer definierten Bewegungsebene zu bewegen.

7. Vorrichtung nach einem der Ansprüche 1 bis 6, **dadurch gekennzeichnet, dass** die Einsetzstation (16, 16') dazu ausgebildet ist, die Behälter-Vorform (96) durch eine schwerkraftbedingte Bewegung von oben in den Behälterträger (56) einzusetzen.

8. Vorrichtung nach einem der Ansprüche 1 bis 7, **dadurch gekennzeichnet, dass** der Behälterträger (34) ein Federelement (142) aufweist, das dazu ausgebildet ist, eine von oben in das Federelement (142) eingesetzte Behälter-Vorform (96) zu halten und ein Entnehmen eines gefüllten Behälters (140) nach unten zu ermöglichen.

9. Vorrichtung nach Anspruch 8, **dadurch gekennzeichnet, dass** das Federelement (142) so dimensioniert ist, dass der gefüllte Behälter (140) schwerkraftbedingt von allein nach unten ausfällt.

10. Vorrichtung nach Anspruch 8 oder 9, **dadurch gekennzeichnet, dass** die Behälter-Vorform (96) einen Halsbereich (102) mit einem Kragen (100) aufweist, wobei das Federelement (142) als ringförmige Scheibe mit einem Innenrand (150) und einem Außenrand (152) ausgebildet ist.

11. Vorrichtung nach Anspruch 10, **dadurch gekennzeichnet, dass** die Scheibe eine Vielzahl von Schlitzen (154) aufweist.

12. Vorrichtung nach einem der Ansprüche 1 bis 11, **dadurch gekennzeichnet, dass** die Arbeitsstationen (12, 12') ferner zumindest eine der nachfolgenden Arbeitsstationen aufweisen:
- eine Temperaturprüfstation (20), die dazu ausgebildet ist, zu prüfen, ob eine Behälter-Vorform (96) eine in einem definierten Temperaturbereich liegende Temperatur aufweist,
- eine Behälterprüfstation (22), die dazu ausgebildet ist, zu prüfen, ob ein geformter Behälter (140) eine Anzahl definierter Formkriterien erfüllt,
- eine Bestrahlungsstation (26), die dazu ausgebildet ist, einen geformten Behälter (140) zumindest teilumfänglich mit UV-Strahlung zu bestrahlen.

13. Vorrichtung nach einem der Ansprüche 1 bis 12, **dadurch gekennzeichnet, dass** die Fördereinrichtung (14') einen Rückführungszweig (190) aufweist.

14. Verfahren zum automatisierten Formen und Abfüllen von Behältern (140), mittels einer Vorrichtung, die eine Vielzahl von Arbeitsstationen (12, 12') und eine Fördereinrichtung (14, 14') aufweist, mit den Schritten:
- Zuordnen einer Behälter-Vorform (96) zu einem definierten Behälterträger (34, 56, 58, 60) mittels einer Einsetzstation (16, 16'),
- Formen eines Behälters (140) aus der Behälter-Vorform (96) mittels einer Behälterformstation (22),
- Abfüllen eines Fluids in den geformten Behälter (140) mittels einer Abfüllstation (28),
- Verschließen des abgefüllten Behälters (140) mittels einer Verschließstation (30),
- Auswerfen des Behälters (140) aus dem Behälterträger (56) mittels einer Auswerfstation (32), und
- Bewegen des Behälterträgers (56) von der Einsetzstation (16, 16') über die Behälterformstation (22), die Abfüllstation (28) und die Verschließstation (30) zu der Auswerfstation (32) mittels in der Fördereinrichtung (14, 14') enthaltener Bewegungseinheiten (36, 38, 40, 42), wobei die Behälter-Vorform (96) und der aus dieser geformte Behälter (140) durchgehend in dem der Behälter-Vorform (96) zugeordneten Behälterträger (56) verbleiben
**dadurch gekennzeichnet, dass** die Arbeitsstationen (12, 12') ferner zumindest eine Erwärmstation (18) aufweisen, die die Behälter-Vorform (96) für das anschließende, in der Behälterformstation (22) erfolgende Formen des Behälters (140) vorwärmt, und **gekennzeichnet durch** einen transportablen Container (74), in dem die Arbeitsstationen (12, 12') und die Fördereinrichtung (14, 14') stationär angeordnet sind und über deren gesamte Gebrauchsdauer in dem Container (74) verbleiben.

## Claims

1. An apparatus for automatically forming and filling containers (140), comprising a plurality of workstations (12, 12') and a conveyer (14, 14'), the workstations (12, 12') at least comprising a container forming station (22), a filling station (28) and a closing station (30), the container forming station (22) being designed for forming a container (140) from a container preform (96), the filling station (28) being designed for filling the formed container (140) with a fluid, the closing station (30) being designed for closing the filled container (140), and the conveyer (14, 14') being designed for moving the container preform (96) and the container (140) between the workstations (12, 12'), wherein the conveyer (14, 14') has a number of container carriers (34, 56, 58, 60) and a number of movement units (36, 38, 40, 42, 192, 196, 200) for moving the container carriers, and the workstations (12, 12') further comprise an insertion station (16, 16') and an ejection station (32), with the insertion station (16, 16') being designed for assigning the container preform (96) to a defined container carrier (56), the ejection station (32) being designed for ejecting the container (140) out of the container carrier (56), the conveyer (14, 14') being designed for moving the container carrier (34) from the insertion station (16) via the container forming station (22), the filling station (28) and the closing station (30) to the ejection station (32), and with the container preform (96) and the container (140) formed from the preform continuously residing in the container carrier (56) assigned to the container preform (96), **characterized in that** the workstations (12, 12') further comprise at least one heating station (18) designed for preheating a container preform (96) for the subsequent forming of the container (140) which takes place in the container forming station (22), and **characterized by** a transportable enclosure (74) in which the workstations (12, 12') and the conveyer (14, 14') are stationarily arranged.

2. The apparatus of claim 1, **characterized in that** the movement units (36, 38, 40, 42, 192, 196, 200) are designed for moving the container carrier (34) on a closed trajectory (44, 46, 48, 50).

3. The apparatus of claim 1 or 2, **characterized in that** the conveyer (14, 14') comprises a first and a second movement unit (36, 38), the first movement unit (36) being designed for moving the container carrier (34) along a first movement direction (44), the second movement unit (38) being designed for moving the container carrier (34) along a second movement direction (46), and the second movement direction (46) being oriented essentially orthogonally to the first movement direction (44).

4. The apparatus of claim 3, **characterized in that** the conveyer (14, 14') comprises a third movement unit (40) designed for moving the container carrier (34) along a third movement direction (48), the third movement direction (48) being oriented essentially orthogonally to the second movement direction (46).

5. The apparatus of one of claims 1 to 4, **characterized in that** the movement units (36, 38, 40, 42, 192, 196, 200) are designed for moving the container carrier (34) in translational motion.

6. The apparatus of one of claims 1 to 5, **characterized in that** the movement units (36, 38, 40, 42, 192, 196, 200) are designed for moving the container carriers (34) essentially within a defined movement plane.

7. The apparatus of one of claims 1 to 6, **characterized in that** the insertion station (16, 16') is designed for inserting the container preform (96) into the container carrier (56) from above as a result of a gravity-induced movement.

8. The apparatus of one of claims 1 to 7, **characterized in that** the container carrier (34) has a spring element (142) which is designed for holding a container preform (96) inserted into the spring element (142) from above and for making it possible to extract a filled container (140) downward.

9. The apparatus of claim 8, **characterized in that** the spring element (142) is dimensioned such that the filled container (140) falls out downward by itself due to gravity.

10. The apparatus of claim 8 or 9, **characterized in that** the container preform (96) has a neck region (102) with a collar (100), with the spring element (142) being designed as an annular disk with an inner edge (150) and with an outer edge (152).

11. The apparatus of claim 10, **characterized in that** the disk has a plurality of slots (154).

12. The apparatus of one of claims 1 to 11, **characterized in that** the workstations (12, 12') further comprise at least one of the following workstations:
- a temperature testing station (20) designed for testing whether a container preform (96) has a temperature lying in a defined temperature range,
- a container testing station (22) designed for testing whether a formed container (140) fulfils a number of predefined forming criteria,
- an irradiation station (26) designed for irradiating a formed container (140) with UV radiation over at least part of its circumference.

13. The apparatus of one of claims 1 to 12, **characterized in that** the conveyer (14') comprises a return branch (190).

14. A method for automatically forming and filling containers (140) by means of an apparatus which has a plurality of workstations (12, 12') and a conveyer (14, 14'), the method comprising the steps of:
- assigning a container preform (96) to a defined container carrier (34, 56, 58, 60) using an insertion station (16, 16'),
- forming a container (140) from the container preform (96) using a container forming station (22),
- filling the formed container (140) with a fluid using a filling station (28),
- closing the filled container (140) using a closing station (30),
- ejecting the container (140) out of the container carrier (56) using an ejection station (32), and
- moving the container carrier (56) from the insertion station (16, 16') via the container forming station (22), the filling station (28) and the closing station (30) to the ejection station (32) by means of movement units (36, 38, 40, 42) which belong to the conveyer (14, 14'), with the container preform (96) and the container (140) formed from the preform continuously residing in the container carrier (56) assigned to the container preform (96)
**characterized in that** the workstations (12, 12') further comprise at least one heating station (18) which preheats the container preform (96) for the subsequent forming of the container (140) taking place in the container forming station (22), and **characterized by** a transportable enclosure (74) in which the workstations (12, 12') and the conveyer (14, 14') are stationarily arranged and remain in the enclosure (74) over their period of use.

## Revendications

1. Dispositif de moulage et de remplissage automatisés de récipients (140), comprenant une pluralité de postes de travail (12, 12') et un dispositif de transport (14, 14'), les postes de travail (12, 12') comprenant au moins un poste de moulage de récipients (22), un poste de remplissage (28) et un poste de fermeture (30), le poste de moulage de récipients (22) étant réalisé pour mouler un récipient (140) à partir d'une préforme de récipient (96), le poste de remplissage (28) étant réalisé pour introduire un fluide dans le récipient moulé (140), le poste de fermeture (30) étant réalisé pour fermer le récipient rempli (140), et le dispositif de transport (14, 14') étant réalisé pour déplacer la préforme de récipient (96) et le récipient (140) entre les postes de travail individuels (12, 12'), le dispositif de transport (14, 14') comprenant un certain nombre de supports de récipient (34, 56, 58, 60) et un certain nombre d'unités de déplacement (36, 38, 40, 42, 192, 196, 200) déplaçant les supports de récipient, et les postes de travail (12, 12') comprenant en outre un poste de mise en place (16, 16') et un poste d'éjection (32), le poste de mise en place (16, 16') étant réalisé pour associer la préforme de récipient (96) à un support de récipient défini (56), le poste d'éjection (32) étant réalisé pour éjecter le récipient (140) hors du support de récipient (56), le dispositif de transport (14, 14') étant réalisé pour déplacer le support de récipient (34) à partir du poste de mise en place (16), par le biais du poste de moulage de récipients (22), du poste de remplissage (28) et du poste de fermeture (30), jusqu'au poste d'éjection (32), et la préforme de récipient (96) et le récipient (140) formé à partir de celle-ci restant en permanece dans le support de récipient (56) associé à la préforme de récipient (96), **caractérisé en ce que** les postes de travail (12, 12') comprennent en outre au moins un poste de chauffage (18) qui est réalisé pour préchauffer une préforme de récipient (96) pour le moulage subséquent, s'effectuant dans le poste de moulage de récipients (22), du récipient (140), et **caractérisé par** un conteneur transportable (74) dans lequel sont disposés de manière fixe les postes de travail (12, 12') et le dispositif de transport (14, 14').

2. Dispositif selon la revendication 1, **caractérisé en ce que** les unités de déplacement (36, 38, 40, 42, 192, 196, 200) sont réalisées pour déplacer le support de récipient (34) sur une trajectoire fermée (44, 46, 48, 50).

3. Dispositif selon la revendication 1 ou 2, **caractérisé en ce que** le dispositif de transport (14, 14') comprend une première et une deuxième unité de déplacement (36, 38), la première unité de déplacement (36) étant réalisée pour déplacer le support de récipient (34) le long d'une première direction de déplacement (44), la deuxième unité de déplacement (38) étant réalisée pour déplacer le support de récipient (34) le long d'une deuxième direction de déplacement (46), et la deuxième direction de déplacement (46) étant orientée essentiellement orthogonalement à la première direction de déplacement (44).

4. Dispositif selon la revendication 3, **caractérisé en ce que** le dispositif de transport (14, 14') comprend une troisième unité de déplacement (40) qui est réalisée pour déplacer le support de récipient (34) le long d'une troisième direction de déplacement (48), la troisième direction de déplacement (48) étant orientée essentiellement orthogonalement à la deuxième direction de déplacement (46).

5. Dispositif selon l'une quelconque des revendications 1 à 4, **caractérisé en ce que** les unités de déplacement (36, 38, 40, 42, 192, 196, 200) sont réalisées pour déplacer en translation les supports de récipient (34).

6. Dispositif selon l'une quelconque des revendications 1 à 5, **caractérisé en ce que** les unités de déplacement (36, 38, 40, 42, 192, 196, 200) sont réalisées pour déplacer les supports de récipient (34) essentiellement à l'intérieur d'un plan de déplacement défini.

7. Dispositif selon l'une quelconque des revendications 1 à 6, **caractérisé en ce que** le poste de mise en place (16, 16') est réalisé pour mettre en place la préforme de récipient (96) par le haut dans le support de récipient (56) par un déplacement causé par la gravité.

8. Dispositif selon l'une quelconque des revendications 1 à 7, **caractérisé en ce que** le support de récipient (34) comprend un élément de ressort (142) qui est réalisé pour retenir une préforme de récipient (96) mise en place par le haut dans l'élément de ressort (142) et pour rendre possible un enlèvement d'un récipient rempli (140) vers le bas.

9. Dispositif selon la revendication 8, **caractérisé en ce que** l'élément de ressort (142) est dimensionné de telle sorte que le récipient rempli (140) tombe tout seul vers le bas sous l'effet de la gravité.

10. Dispositif selon la revendication 8 ou 9, **caractérisé en ce que** la préforme de récipient (96) présente une région de col (102) pourvue d'une collerette (100), l'élément de ressort (142) étant réalisé sous forme de disque annulaire présentant un bord intérieur (150) et un bord extérieur (152).

11. Dispositif selon la revendication 10, **caractérisé en ce que** le disque comprend une pluralité de fentes (154).

12. Dispositif selon l'une quelconque des revendications 1 à 11, **caractérisé en ce que** les postes de travail (12, 12') comprennent en outre au moins l'un des postes de travail suivants :
- un poste de contrôle de température (20) qui est réalisé pour contrôler si une préforme de récipient (96) présente une température se situant dans une plage de températures définie,
- un poste de contrôle de récipient (22) qui est réalisé pour contrôler si un récipient moulé (140) satisfait à un certain nombre de critères de moulage définis,
- un poste d'irradiation (26) qui est réalisé pour irradier un récipient moulé (140) par un rayonnement UV au moins sur une partie de sa périphérie.

13. Dispositif selon l'une quelconque des revendications 1 à 12, **caractérisé en ce que** le dispositif de transport (14') comprend une branche de retour (190).

14. Procédé de moulage et de remplissage automatisés de récipients (140), au moyen d'un dispositif qui comprend une pluralité de postes de travail (12, 12') et un dispositif de transport (14, 14'), comprenant les étapes de :
- association d'une préforme de récipient (96) à un support de récipient défini (34, 56, 58, 60) au moyen d'un poste de mise en place (16, 16'),
- moulage d'un récipient (140) à partir de la préforme de récipient (96) au moyen d'un poste de moulage de récipients (22),
- introduction d'un fluide dans le récipient moulé (140) au moyen d'un poste de remplissage (28),
- fermeture du récipient rempli (140) au moyen d'un poste de fermeture (30),
- éjection du récipient (140) hors du support de récipient (56) au moyen d'un poste d'éjection (32), et
- déplacement du support de récipient (56) à partir du poste de mise en place (16, 16'), par le biais du poste de moulage de récipients (22), du poste de remplissage (28) et du poste de fermeture (30), jusqu'au poste d'éjection (32) au moyen d'unités de déplacement (36, 38, 40, 42) contenues dans le dispositif de transport (14, 14'), la préforme de récipient (96) et le récipient (140) formé à partir de celle-ci restant en permanence dans le support de récipient (56) associé à la préforme de récipient (96), **caractérisé en ce que** les postes de travail (12, 12') comprennent en outre au moins un poste de chauffage (18) qui préchauffe la préforme de récipient (96) pour le moulage subséquent, s'effectuant dans le poste de moulage de récipients (22), du récipient (140), et **caractérisé par** un conteneur transportable (74) dans lequel sont disposés de manière fixe les postes de travail (12, 12') et le dispositif de transport (14, 14'), lesquels restent dans le conteneur (74) pendant toute leur durée d'utilisation.
